# EUROPEAN PATENT SPECIFICATION

(11) **EP 2 963 066 B1**
(45) Date of publication and mention of the grant of the patent: **27.12.2017**
(21) Application number: 14756451.2
(22) Date of filing: 27.02.2014
(51) Int. Cl.: C08F 8/00, B60C 1/00, C08F 4/44, C08F 8/42, C08F 36/04, C08K 3/36, C08L 15/00, C08C 19/44, C08C 19/22, C08C 19/25, C08J 3/24, C08K 5/544

(54) **MODIFIED CONJUGATED DIENE POLYMER AND METHOD FOR PRODUCING SAME, POLYMER COMPOSITION, CROSSLINKED POLYMER, AND TIRE**
MODIFIZIERTES KONJUGIERTES DIENPOLYMER UND VERFAHREN ZUR HERSTELLUNG DAFÜR, POLYMERZUSAMMENSETZUNG, VERNETZTES POLYMER UND REIFEN
POLYMÈRE DE DIÈNE CONJUGUÉ MODIFIÉ ET SON PROCÉDÉ DE PRODUCTION, COMPOSITION POLYMÈRE, POLYMÈRE RÉTICULÉ, ET PNEU

(30) Priority: 28.02.2013 JP 2013039335
(43) Date of publication of application: 06.01.2016
(73) Proprietor: JSR Corporation, Minato-ku Tokyo 105-8640 (JP)
(72) Inventor: MORITA, Hiroyuki, Tokyo 105-8640 (JP); TANI, Koichiro, Tokyo 105-8640 (JP); OKADA, Koji, Tokyo 105-8640 (JP); INOUE, Masaaki, Tokyo 105-8640 (JP)
(74) Representative: TBK
(86) International application number: PCT/JP2014/054932
(87) International publication number: WO 2014/133096

(56) References cited:
- EP-A1- 1 457 501
- EP-A1- 1 462 459
- EP-A1- 1 726 598
- EP-A1- 2 123 687
- EP-A1- 2 492 286
- EP-A1- 2 554 553
- WO-A1-2009/004918
- WO-A1-2011/079922
- WO-A2-2009/117329
- JP-A- 2001 131 340
- JP-A- 2001 158 837
- JP-A- 2010 155 935
- JP-A- 2010 209 253
- JP-A- 2010 209 256
- JP-A- 2012 149 239
- JP-A- 2012 214 662

## Description

### Technical Field

The present invention relates to a modified conjugated diene polymer and a method for producing the same, a polymer composition, a crosslinked polymer, and a tire.

### Background Art

As rubbers for automobile tires, conjugated diene rubbers (e.g., styrene-butadiene copolymers etc.) obtained by emulsion polymerization methods or solution polymerization methods have been hitherto known. In recent years, it has been required to further improve low fuel consumption performance of automobiles and, for realizing it, various modified conjugated diene polymer in which a functional group is introduced into an end of a conjugated diene polymer have been proposed (e.g., see Patent Documents 1 and 2). Patent Document 1 discloses that a conjugated diene polymer having a lithium active end is obtained by polymerization using a lithium compound such as n-butyllithium and subsequently the conjugated diene polymer is reacted with a polyfunctional coupling agent (tin tetrachloride or the like) and then further reacted with an alkoxysilane compound to thereby obtain a modified conjugated diene polymer. Moreover, Patent Document 2 discloses that a modified conjugated diene polymer is obtained by performing polymerization using a reaction product of a secondary amine compound with a lithium compound as a polymerization initiator and also subjecting a polymerization active end to a coupling reaction using a modifying agent such as silicon tetrachloride.

### Related Art Documents

### Patent Documents

Patent Document 1: JP-A-2004-18795
Patent Document 2: JP-A-6-279515

EP2492286 (A1) discloses a method of producing a conjugated diene rubber capable of being used as a starting material for a crosslinked rubber that can be used in applications such as tire treads and can raise the fuel efficiency. This method of producing a conjugated diene rubber comprises (a) a step of reacting a first alkoxysilane compound having in a molecule at least one group convertible to onium by an onium generator and at least one alkoxysilyl group that has at least two alkoxy groups, with a conjugated diene polymer having an alkali metal or alkaline-earth metal active terminal and obtained by polymerizing a conjugated diene compound and an aromatic vinyl compound, thereby to obtain a modified conjugated diene polymer that has the group convertible to onium and the alkoxysilyl group, and (b) a step of mixing the resulting modified conjugated diene polymer with the onium generator and a second alkoxysilane compound having in a molecule at least one alkoxysilyl group and at least one group convertible to onium by the onium generator.

EP2554553 (A1) mentions a producing method of conjugated diene rubber which can be used as a starting material of cross-linked rubber which is used for such as tire tread and can enhance low fuel consumption performance. The method of producing modified conjugated diene rubber, comprising: a process step (a) wherein a conjugated diene polymer with an alkali metal or alkaline-earth metal active terminal, which polymer is obtained from polymerization of a conjugated diene compound or polymerization of a conjugated diene compound with an aromatic vinyl compound, is allowed to react with a hydrocarbyloxysilane compound having in its molecule at least one or more of each of the following functional groups (I): a hydrocarbyloxysilyl group and (II): a nitrogen-containing group formed by substituting one protective group for one hydrogen atom of a secondary amine, a tertiary amino group, an imino group, a pyridyl group to obtain a modified conjugated diene polymer with the functional group (II), and a process step (b) wherein the modified conjugated diene polymer produced in the process step (a) is mixed with an onium-forming agent.

EP1457501 (A1) discloses a conjugated diolefin (co)polymer rubber formed from either a conjugated diolefin or a conjugated diolefin and an aromatic vinyl compound, wherein the (co)polymer rubber has a primary amino group and an alkoxysilyl group which are bonded to a (co)polymer chain; a process for producing the same; a rubber composition; a composite; and a tire.

EP1726598 (A1) describes a conjugated diolefin (co)polymer rubber which is small in variations in the Mooney viscosity of the resulting rubber, and in which later changes in the Mooney viscosity with the elapse of time can also be restrained. A conjugated diolefin (co)polymer rubber which is a conjugated diolefin (co)polymer rubber obtained from a conjugated diolefin or a conjugated diolefin and an aromatic vinyl compound, having an alkoxysilyl group and desolvated under alkaline conditions.

EP1462459 (A1) provides a process for producing a modified polymer, characterized by carrying out primary modification in which a hydrocarbyloxysilane compound is reacted with the active site of a polymer having an active site of an organic metal type in a molecule and then carrying out secondary modification in which the hydrocarbyloxysilane compound is further reacted therewith.

WO2009117329 (A2) discloses a polymer including at a terminus a cyclic amine radical bonded to the polymer through a ring nitrogen atom. The polymer can be provided by using a lithiated version of the cyclic amine to initiate polymerization of one or more ethylenically unsaturated monomers. The polymer can be used in the production in a variety of vulcanizates.

WO2011079922 (A1) mentions a first composition comprising at least the following: i) a modified polymer comprising at least one branched modified polymer macromolecule (b1) and at least one linear modified polymer macromolecule (a1), and wherein the at least one branched modified polymer macromolecule and the at least one linear modified polymer macromolecule each, independently, comprises at least one amine group selected from the group consisting of formulas (1 A-IF), and combinations thereof; and wherein the at least one branched modified polymer macromolecule further comprises one of the structures (ib1-ib4), and the at least one linear modified polymer macromolecule further comprises one of the structures (iibl-iib2).

EP2123687 (A1) discloses a conjugated diolefin copolymer rubber being produced by copolymerization of a conjugated diolefin and an aromatic vinyl compound and has a primary amino group and an alkoxysilyl group bonded to the copolymer chain. The conjugated diolefin copolymer rubber contains the aromatic vinyl compound in an amount of 5 to 60 wt%. The aromatic vinyl compound is densely distributed in one terminal of the copolymer chain, and is scarcely distributed in the other terminal.

### Summary of the Invention

### Problems to Be Solved by the Invention

Under environmental circumstances such as a price increase of gasoline and environmental circumstances such as global warming resulting from carbon dioxide emissions in recent years, as a rubber for automobile tires, it has been desired to realize a material more excellent in low fuel consumption performance than conventional one. Furthermore, along with the low fuel consumption performance, it has been also required that properties such as abrasion resistance and workability are also satisfactory.

The present invention has been made in view of the above problems and a main object of the invention is to provide a modified conjugated diene polymer and a method for producing the same, for obtaining a rubber composition capable of simultaneously improving low fuel consumption performance, workability, and abrasion resistance in uses of automobile tires and the like.

### Means for Solving the Problems

In order to solve the problems of the conventional technologies as mentioned above, as a result of intensive studies, the present inventors have found that it is possible to solve the above problems by producing a modified conjugated diene polymer using a method comprising a step of modifying at least either of a polymerization initiation end and a polymerization active end and also comprising a step of modifying the polymerization active end using a specific polyfunctional coupling agent and thus have accomplished the present invention. Specifically, the invention provides a modified conjugated diene polymer and a method for producing the same, a polymer composition, a crosslinked polymer, and a tire to be described below.

In one aspect, the invention provides a method for producing a modified conjugated diene polymer, comprising a polymerization step of polymerizing a conjugated diene compound or polymerizing a conjugated diene compound and an aromatic vinyl compound to obtain a conjugated diene polymer having an active end, in the presence of a metal amide compound obtained by mixing an alkali metal compound or an alkaline earth metal compound with a secondary amine compound and a first modification step of reacting the active end of the conjugated diene polymer with the following compound (C1):
(C1) a compound having a functional group (a) that interacts with silica, having one or more linear structures where three or more groups or atoms in total derived from at least either of a methylene group and a divalent atom are linearly connected, and capable of binding to a plurality of the active ends.

Also, the compound (C1) can be the following compound (C1'):
(C1') a compound having a functional group (a) that interacts with silica, having a plurality of functional groups (b) capable of reacting with the active end, and capable of binding the active end to the functional group (a) through a linear structure composed of three or more atoms connected with a single bond, by a reaction of the functional group (b) with the active end.

In another aspect, the invention provides a polymer composition containing the modified conjugated diene polymer obtained by the above production method, silica, and a crosslinking agent. Moreover, it provides a crosslinked polymer obtained by crosslinking the polymer composition. Furthermore, it provides a tire using the crosslinked polymer at least as a material of a tread or a side wall.

### Effects of the Invention

According to the present production method, it is possible to produce a modified conjugated diene polymer capable of simultaneously improving low fuel consumption performance, workability, and abrasion resistance required in uses of automobile tires and the like. Therefore, the modified conjugated diene polymer produced by the production method is suitable for uses of automobile tires and the like.

### Modes for Carrying Out the Invention

### [1] Modified Conjugated Diene Polymer and Method for Producing the Same

The method for producing a modified conjugated diene polymer of the invention comprises a polymerization step of obtaining a conjugated diene polymer having an active end and a first modification step of reacting the active end of the conjugated diene polymer obtained by the polymerization step with a specific compound (C1). The following will illustrates the above individual steps and the other steps to be carried out as needed.

### <Polymerization Step>

The conjugated diene polymer in the invention can be obtained by polymerizing a monomer including a conjugated diene compound or monomers including a conjugated diene compound and an aromatic vinyl compound.

Here, examples of the conjugated diene compound to be used in the polymerization include 1,3-butadiene, isoprene, 2,3-dimethyl-1,3-butadiene, 1,3-pentadiene, 1,3-hexadiene, 1,3-heptadiene, 2-phenyl-1,3-butadiene, 3-methyl-1,3-pentadiene, 2-chloro-1,3-butadiene, and the like. Of these, 1,3-butadiene, isoprene, 2,3-dimethyl-1,3-butadiene, and the like are preferable. These conjugated diene compounds may be used either singly or as a combination of two or more thereof.

Moreover, examples of the aromatic vinyl compound include styrene, 2-methylstyrene, 3-methylstyrene, 4-methylstyrene, α-methylstyrene, 2,4-dimethylstyrene, 2,4-diisopropylstyrene, 4-t-butylstyrene, 5-t-butyl-2-methylstyrene, vinylethylbenzene, divinylbenzene, trivinylbenzene, divinylnaphthalene, t-butoxystyrene, vinylbenzyldimethylamine, (4-vinylbenzyl) dimethylaminoethyl ether, N,N-dimethylaminoethylstyrene, N,N-dimethylaminomethylstyrene, 2-ethylstyrene, 3-ethylstyrene, 4-ethylstyrene, 2-t-butylstyrene, 3-t-butylstyrene, 4-t-butylstyrene, vinylxylene, vinylnaphthalene, vinylpyridine, diphenylethylene, tertiary amino group-containing diphenylethylenes (e.g., 1-(4-N,N-dimethylaminophenyl)-1-phenylethylene etc.), and the like. As the aromatic vinyl compounds, of these, styrene is particularly preferable. The aromatic vinyl compounds may be used either singly or as a combination of two or more thereof.

Incidentally, all the conjugated diene polymers and aromatic vinyl compounds exemplified in the above have a similar action, from the standpoint that it is possible to obtain the conjugated diene polymer having an active end. Therefore, even one not described in Examples to be mentioned later can be used in the invention.

The conjugated diene polymer obtained by the present polymerization step may be a homopolymer of the conjugated diene compound but, from the standpoint of increasing the strength of a rubber, a copolymer of the conjugated diene compound and the aromatic vinyl compound is preferable. In particular, in view of a high living nature in anionic polymerization, a copolymer of 1,3-butadiene and styrene is preferable.

In the copolymer of the conjugated diene compound and the aromatic vinyl compound, the amount of the aromatic vinyl compound to be used is preferably from 3 to 55% by mass and more preferably from 5 to 50% by mass based on the total amount of the conjugated diene compound and the aromatic vinyl compound to be used in the polymerization, from the standpoint of a good balance between low hysteresis loss properties and wet skid resistance of the polymer obtained by a crosslinking treatment.

At the time of polymerization, a monomer other than the conjugated diene compounds and aromatic vinyl compounds may be used. Examples of the other monomer include acrylonitrile, methyl (meth)acrylate, ethyl (meth)acrylate, hydroxyethyl (meth)acrylate, and the like. The amount of the other monomer to be used is preferably 25% by mass or less, more preferably 15% by mass or less, and further preferably 10% by mass or less based on the total amount of the monomers to be used in the polymerization.

The conjugated diene polymer in the invention can be produced by performing anionic polymerization using monomer(s) including at least the conjugated diene compound. As a polymerization method, any one of a solution polymerization method, a gas-phase polymerization method, and a bulk polymerization method may be used but the solution polymerization method is particularly preferable. Furthermore, as a polymerization type, either of a batch type and a continuous type may be used.

In the case where the solution polymerization method is used, as one example of specific polymerization methods, there may be mentioned a method of polymerizing the monomer(s) including the conjugated diene compound in an organic solvent in the presence of a polymerization initiator and a randomizer which is used as needed.

As the polymerization initiator, a metal amide compound obtained by mixing an alkali metal compound or an alkaline earth metal compound with a secondary amine compound or a polyfunctional lithium compound can be used. The total amount of the polymerization initiator to be used is preferably from 0.2 to 20 mmol based on 100 g of the monomer(s) to be used in the polymerization. Incidentally, the polymerization initiator may be used either singly or as a combination of two or more thereof.

Specific examples of the alkali metal compound or the alkaline earth metal compound include monolithium compounds such as methyllithium, ethyllithium, n-propyllithium, n-butyllithium, sec-butyllithium, tert-butyllithium, phenyllithium, stilbenelithium, and naphthyllithium; polyfunctional lithium compounds such as 1,4-dilithiobutane, 1,4-dilithio-2-ethylcyclohexane, sec-butyllithium/1,3-diisopropenylbenzene diadduct, and 1,3,5-trilithiobenzene; and also naphthylsodium, naphthylpotassium, di-n-butylmagnesium, di-n-hexylmagnesium, ethoxypotassium, calcium stearate, and the like. Of these, alkyl metal compounds are preferable and lithium compounds such as monolithium compounds and polyfunctional lithium compounds are particularly preferable.

In the case where the metal amide compound is used as the polymerization initiator, a nitrogen-containing group can be introduced into the polymerization initiation end of the conjugated diene polymer. As the secondary amine compound to be used for the preparation of the metal amide compound, the other structure is not particularly limited as long as the compound has a secondary amino group and examples thereof include alkylamines, alicyclic amines, aromatic amines, heterocyclic amines, and the like. Of these, in view that the dispersibility of silica can be improved, heterocyclic amines can be preferably used.

As the secondary amine compound, there can be preferably used a compound further having a trisubstituted nitrogen atom to which three atoms other than a hydrogen atom are bound in the other structure than the secondary amino group. Such a compound is preferably a compound having, as the group containing the trisubstituted nitrogen atom, at least one selected from the group consisting of a nitrogen-containing group in which two hydrogen atoms of a primary amino group are each substituted with a monovalent protective group, a nitrogen-containing group in which one hydrogen atom of a secondary amino group is substituted with a monovalent protective group, and a tertiary amino group. In view of a high improving effect in dispersibility of silica, the compound is more preferably a compound having at least one selected from the group consisting of a nitrogen-containing group in which two hydrogen atoms of a primary amino group are each substituted with a monovalent protective group and a nitrogen-containing group in which one hydrogen atom of a secondary amino group is substituted with a monovalent protective group and is further preferably a compound having a nitrogen-containing group in which one hydrogen atom of a secondary amino group is substituted with a monovalent protective group. Incidentally, the "protective group" herein means a functional group that converts an amino group into an inactive functional group against the polymerization initiator.

With regard to the secondary amine compound, as specific examples of the compound having at least one selected from the group consisting of a nitrogen-containing group in which two hydrogen atoms of a primary amino group are each substituted with a monovalent protective group, a nitrogen-containing group in which one hydrogen atom of a secondary amino group is substituted with a monovalent protective group and a tertiary amino group, for example, compounds represented by the following formulae (3) and (4) may be mentioned: 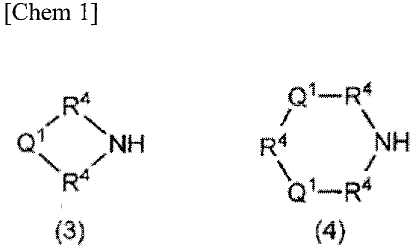 wherein R⁴ is a hydrocarbylene group and Q¹ is a divalent group represented by the following formula (5), (6), or (7); R⁴'s and Q¹'s present in plurality in the formula may be 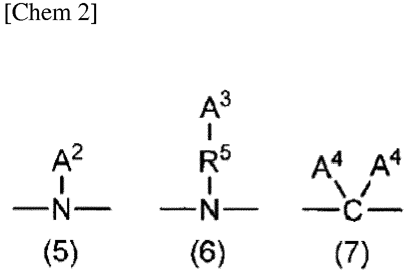 wherein, in the formula (5), A² is a hydrocarbyl group or a trisubstituted hydrocarbylsilyl group in which three hydrocarbyl groups are bound to a silicon atom; in the formula (6), A³ is a monovalent functional group which has the trisubstituted hydrocarbylsilyl group and at least one atom selected from the group consisting of a nitrogen atom, a phosphorus atom, and a sulfur atom, does not have an active hydrogen, and binds to R⁵ with a nitrogen atom, a phosphorus atom, or a sulfur atom, a tertiary amino group, a tertiary phosphino group, or -SR¹ (R¹ is a hydrocarbyl group); R⁵ is a hydrocarbylene group; in the formula (7), A⁴ is a monovalent functional group which has at least one atom selected from the group consisting of a nitrogen atom, a phosphorus atom, and a sulfur atom, does not have an active hydrogen, and binds to the carbon atom composing the nitrogen-containing heterocycle with a nitrogen atom, a phosphorus atom, or a sulfur atom; A⁴'s existing in plurality are the same or different from each other.

In the formulas, the hydrocarbylene groups of R⁴ and R⁵ are preferably a saturated or unsaturated linear hydrocarbon group having 1 to 10 carbon atoms and more preferably an alkanediyl group having 1 to 10 carbon atoms. As the hydrocarbyl group of A², there may be mentioned a linear or branched alkyl group having 1 to 10 carbon atoms, an alkenyl group having 2 to 10 carbon atoms, a cycloalkyl group having 3 to 10 carbon atoms, an aryl group or aralkyl group having 6 to 10 carbon atoms, and the like.

With regard to the trisubstituted hydrocarbylsilyl group in A² and A³, the explanation of the hydrocarbyl group of A² can be applied to the hydrocarbyl group to be bound to the silicon atom and particularly, the hydrocarbyl group is preferably a linear or branched alkyl group having 1 to 10 carbon atoms. Incidentally, the three hydrocarbyl groups to be bound to the silicone atom may be the same or different from one another.

A² is preferably the trisubstituted hydrocarbylsilyl group. A³ is preferably a monovalent functional group having the trisubstituted hydrocarbylsilyl group. Incidentally, the "active hydrogen" herein means a hydrogen atom bound to an atom other than a carbon atom, and preferably, means one having lower bond energy than that of a carbon-hydrogen bond of polymethylene.

As the compound represented by the above formula (3) or (4), for example, the compounds represented by the following formulae may be mentioned.

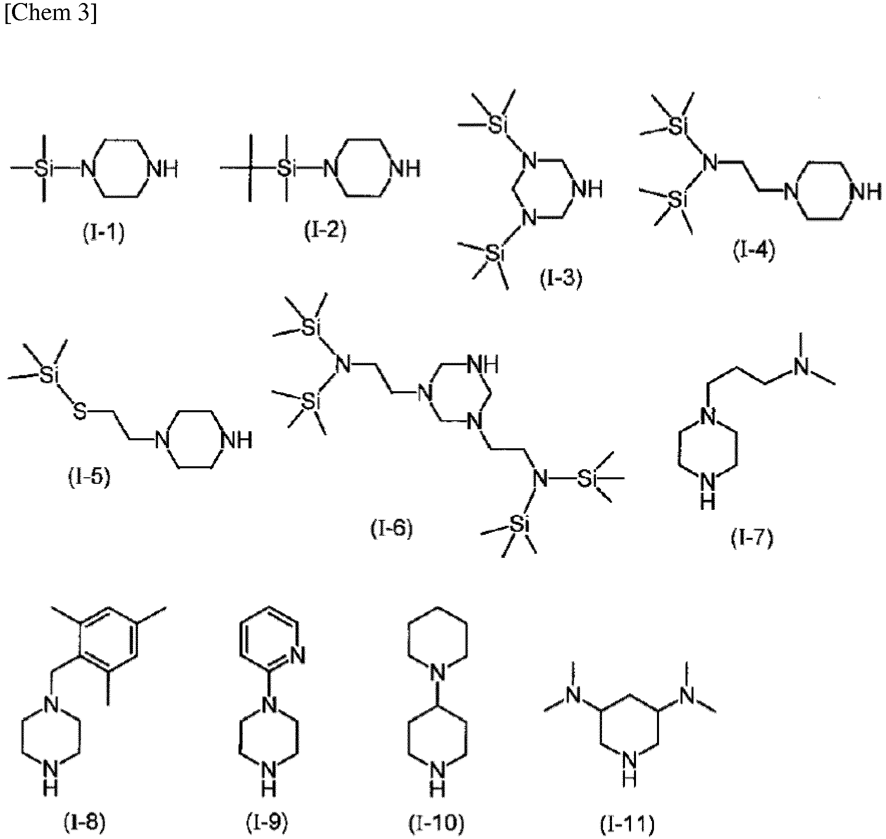

The embodiment of allowing the metal amide compound to exist in a polymerization system as the polymerization initiator may be an embodiment where a compound prepared by previously mixing an alkali metal compound or an alkaline earth metal compound with a secondary amine compound is added to the polymerization system or may be an embodiment where an alkali metal compound or an alkaline earth metal compound and a secondary amine compound is added separately to the polymerization system and the both are mixed therein.

The amount of the secondary amine compound to be used relative to the alkali metal compound or the alkaline earth metal compound can be appropriately set depending on the kind of the alkali metal compound or the alkaline earth metal compound to be used. For example, in the case of using a monolithium compound, the amount can be usually set in the range of 0.1 to 1.8 mol relative to 1 mol of the total of the monolithium compound to be used in the above polymerization. From the standpoint of suppressing a decrease in workability when formed into a polymerization composition, the modification of the initiation end with the metal amide compound is preferably performed partially. From such a standpoint, the amount of the secondary amine compound to be used is preferably less than 1 mol, more preferably 0.9 mol or less, further preferably 0.7 mol or less, and especially preferably 0.5 mol or less relative to 1 mol of the total amount of the monolithium compound to be used in the polymerization.

The randomizer can be used for the purpose of adjustment and the like of the content ratio of vinyl bonds (1,2-bond and 3,4-bond) (vinyl content). Examples of the randomizer include dimethoxybenzene, tetrahydrofuran, dimethoxyethane, diethylene glycol dibutyl ether, diethylene glycol dimethyl ether, 2,2-di(tetrahydrofuryl)propane, 2-(2-ethoxyethoxy)-2-methylpropane, triethylamine, pyridine, N-methylmorpholine, tetramethylethylenediamine, and the like. They may be used either singly or as a combination of two or more thereof.

The organic solvent to be used in the polymerization may be any one as long as it is a reaction-inactive organic solvent. For example, an aliphatic hydrocarbon, alicyclic hydrocarbon or aromatic hydrocarbon or the like can be used. In particular, hydrocarbons having 3 to 8 carbon atoms are preferable. Specific examples thereof include propane, n-butane, isobutane, n-pentane, isopentane, n-hexane, cyclohexane, propene, 1-butene, isobutene, trans-2-butene, cis-2-butene, 1-pentyne, 2-pentyne, 1-hexene, 2-hexene, benzene, toluene, xylene, ethylbenzene, heptane, cyclopentane, methylcyclopentane, methylcyclohexane, 1-pentene, 2-pentene, cyclohexene, and the like. The organic solvents may be used either singly or as a combination of two or more thereof.

In the case where the solution polymerization is used, the monomer concentration in a reaction solvent is preferably from 5 to 50% by mass and more preferably from 10 to 30% by mass, from the standpoint of maintaining a balance between productivity and easiness of polymerization control. The temperature of the polymerization reaction is preferably from -20 to 150°C, more preferably from 0 to 120°C, and particularly preferably from 20 to 100°C. The polymerization reaction is preferably conducted under a pressure enough to keep the monomer(s) substantially in a liquid phase. Such a pressure can be obtained by a method of pressurizing the inside of a reactor with a gas inactive to the polymerization reaction, or a similar method.

A conjugated diene polymer having an active end can be obtained by the above polymerization reaction. The weight-average molecular weight (Mw) of the conjugated diene polymer in terms of polystyrene on gel permeation chromatography (GPC) is preferably from 1.0×10⁵ to 2.0×10⁶. When Mw is smaller than 1.0×10⁵, the low hysteresis loss properties and abrasion resistance tend to decrease in the crosslinked polymer obtained using the polymer composition containing the modified conjugated diene polymer of the invention. When Mw is larger than 2.0×10⁶, workability of the polymer composition tend to decrease. Mw is more preferably from 1.2×10⁵ to 1.5×10⁶ and further preferably from 1.5×10⁵ to 1.0×10⁶. Moreover, the vinyl content is preferably from 30 to 65% by mass, more preferably 33 to 62% by mass, and further preferably from 35 to 60% by mass. When the vinyl content is less than 30% by mass, the grip properties are prone to decrease exceedingly and, when the content exceeds 65% by mass, the abrasion resistance tends to get worse. Incidentally, the vinyl content is a value measured by ¹H-NMR.

### <First Modification Step>

The first modification step in the production method of the invention is the step of reacting the active end of the conjugated diene polymer with the following compound (C1):
(C1) a compound having a functional group (a) that interacts with silica, having one or more linear structures where three or more groups or atoms in total derived from at least either of a methylene group and a divalent atom are linearly connected, and capable of binding to a plurality of the active ends.
The following compound (C1') can be the compound (C1):
(C1') a compound having a functional group that interacts with silica, having a plurality of functional groups (b) capable of reacting with the active end, and capable of binding the active end to the functional group (a) through a linear structure composed of three or more atoms connected with a single bond, by a reaction of the functional group (b) with the active end.
When the compound (C1') is used as the compound (C1), it is possible to obtain a branched or radial modified conjugated diene polymer in which two or more polymer chains having an active end are bound to the functional groups (b) through a linear structure composed of three or more atoms connected with a single bond. Herein, "interaction" means that a covalent bond is formed between molecules or an intermolecular force weaker than a covalent bond (e.g., an electromagnetic force working between molecules, such as ion-dipole interaction, dipole-dipole interaction, a hydrogen bond, Van der Waals force) is formed between molecules.

The conjugated diene polymer to be subjected to the reaction with the above compound (C1) may be any one as far as it has a metal active end. Therefore, there may be used a conjugated diene polymer in which the polymerization initiation end is a hydrocarbon group and another end is a polymerization active end or there may be used a conjugated diene polymer which has a nitrogen-containing group at the polymerization initiation end and in which another end is a polymerization active end. In addition, a mixture of these conjugated diene polymers may be used.

The functional group (a) of the above compound (C1) refers to a group having at least one atom that interacts with silica, such as a nitrogen atom, a sulfur atom, a phosphorus atom, an oxygen atom, or a silicon atom. The above functional group (b) may be a functional group capable of reacting with the active end of the conjugated diene polymer and specifically, is preferably at least one selected from the group consisting of halogen atoms (especially a chlorine atom), epoxy groups, alkoxysilyl groups, carbonyl groups, and carbonyloxy groups.

The compound (C1) has a linear structure linear structure composed of three or more atoms connected with a single bond. Here, the "linear structure composed of three or more atoms connected with a single bond" means a structure in which three or more groups or atoms in total derived from at least either of a methylene group and a divalent atom are linearly connected. The divalent atom that composes the linear structure is preferably an oxygen atom. Moreover, the linear structure is preferably a structure having rotational degree of freedom equal to or higher than that of a propylene chain composed of three carbon atoms connected with a single bond and specifically, the structure is preferably composed of 3 to 6 atoms connected.

As preferable specific examples of the compound (C1), for example, there may be mentioned the following compounds (C1-1) to (C1-7) or the like.
(C1-1): A compound having one or more heterocycles composed of a nitrogen atom and a hydrocarbon and having two or more alkoxysilyl groups in which two or more alkoxy groups are bound to a silicon atom, where the alkoxysilyl group is bound to the nitrogen atom of the heterocycle through an alkylene chain composed of three or more carbon atoms connected with a single bond.
(C1-2): A compound having a polysiloxane structure and having two or more epoxy groups, where the epoxy group is bound to the silicon atom of the polysiloxane structure through a methylene group, an alkylene chain composed of and two or more carbon atoms connected with a single bond or an ether chain composed one or more carbon atoms and one or more oxygen atoms connected with a single bond.
(C1-3): A compound having a nitrogen-containing group having no active hydrogen or a polyether structure and having a group "-SiX¹X²X³" (provided that X¹ and X² are each independently a halogen atom or an alkoxy group and X³ is a halogen atom, an alkoxy group, or an alkyl group), where the group "-SiX¹X²X³" is bound to the nitrogen atom of the nitrogen-containing group or the oxygen atom of the polyether structure through an alkylene chain composed of three or more carbon atoms connected with a single bond (provide that those corresponding to the compound (C1-1) are excluded).
(C1-4): A compound having a polyether structure, a polyhydric alcohol structure, or a diamine structure and having two or more epoxy groups, where the epoxy group is bound to the oxygen atom of the polyether structure or the polyhydric alcohol structure or the nitrogen atom of the diamine structure through a methylene group, an alkylene chain composed of and two or more carbon atoms connected with a single bond or an ether chain composed of one or more carbon atoms and one or more oxygen atoms connected with a single bond.
(C1-5): A compound having two groups "-SiX⁴X⁵X⁶" (provided that X⁴ and X⁵ are each independently a halogen atom or an alkoxy group and X⁶ is a halogen atom, an alkoxy group, or an alkyl group), where the groups "-SiX¹X²X³" are bound with an alkylene chain composed of three or more carbon atoms connected with a single bond or a linear structure containing an oxygen atom between the carbon-carbon bond of the alkylene group.
(C1-6): A compound having two or more nitrogen atoms protected with a benzylidene group and having an alkylene chain composed of three or more carbon atoms connected with a single bond or a linear structure containing an oxygen atom between the carbon-carbon bond of the alkylene group.
(C1-7): A compound having two or more groups in total derived from at least any of a group "-C(=O)R¹⁰", a group "-P(=O)R¹¹R¹², and a group "-SiX⁷X⁸X⁹" (provided that R¹⁰, R¹¹, and R¹² are each independently a halogen atom or an alkoxy group; X⁷ and X⁸ are each independently a halogen atom or an alkoxy group and X⁹ is a halogen atom, an alkoxy group, or an alkyl group) and having an alkylene chain composed of three or more carbon atoms connected with a single bond or a linear structure containing an oxygen atom between the carbon-carbon bond of the alkylene group (provided that those corresponding to the above (C1-1) to (Cl-6) are excluded).

Of the compounds (C1), as the compound (C1-1), the following compounds (C1-1-1) and (C1-1-2) and the like may be mentioned.
(C1-1-1) A compound having one or more heterocycles composed of two or more nitrogen atoms and a hydrocarbon and having two or more alkoxysilyl groups in which two or more alkoxy groups are bound to a silicon atom, where the alkoxysilyl group is bound to the nitrogen atom of the heterocycle through an alkylene chain composed of three or more carbon atoms connected with a single bond.
(C1-1-2) A compound having one or more heterocycles composed of one nitrogen atom and two or more hydrocarbons and having two or more alkoxysilyl groups in which two or more alkoxy groups are bound to a silicon atom, where the alkoxysilyl group is bound to the nitrogen atom of the heterocycle through an alkylene chain composed of three or more carbon atoms connected with a single bond.

As preferable examples of the compound (C1-1-1), for example, the compounds represented by the following formula (10) or (11) and the like may be mentioned. 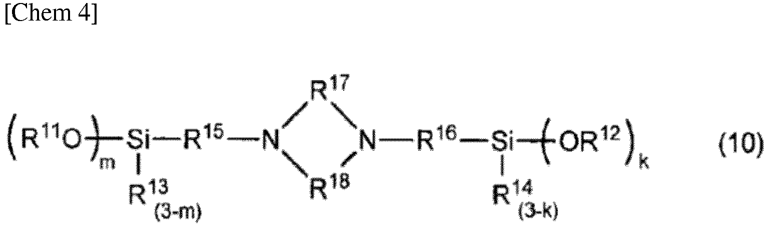 wherein R¹¹ to R¹⁴ are each independently an alkyl group having 1 to 20 carbon atoms or an aryl group; R¹⁵ and R¹⁶ are each independently an alkanediyl group having 3 to 20 carbon atoms, provided that at least either of R¹⁵ and R¹⁶ has a linear structure having 3 or more carbon atoms; R¹⁷ and R¹⁸ are each independently a hydrocarbylene group having 1 to 6 carbon atoms and form a ring structure having 5 or more ring members together with adjacent two nitrogen atoms; k and m are each independently 2 or 3. 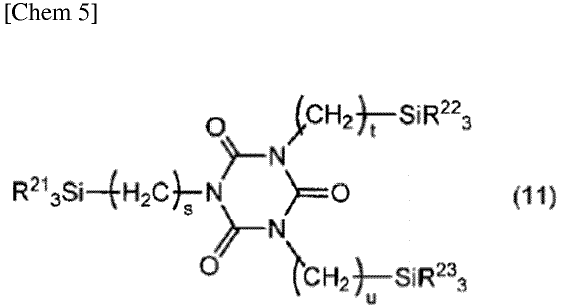 wherein R²¹ to R²³ are each independently a hydrocarbyloxy group or a hydrocarbyl group, a plurality of R²¹'s may be the same or different from one another, a plurality of R²²'s may be the same or different from one another, and a plurality of R²³'s may be the same or different from one another, provided that at least one of three R²¹'s is a hydrocarbyloxy group, at least one of three R²²'s is a hydrocarbyloxy group, and at least one of three R²³'s is a hydrocarbyloxy group; s, t, and u are each independently an integer of 1 to 8, provided that at least any one of s, t, and u is 3 or more.

In the above formula (10), the hydrocarbylene group having 1 to 6 carbon atoms is preferably an alkanediyl group having 1 to 3 carbon atoms. k and m are preferably 3 from the standpoint of the reactivity with the active end of the polymer, for example.

In the above formula (11), R²¹, R²², and R²³ preferably have 1 to 8 carbon atoms, more preferably have 1 to 5 carbon atoms, and further preferably have 1 or 2 carbon atoms. R²¹, R²², and R²³ are preferably a hydrocarbyloxy group from the standpoint of the reactivity with the active end of the polymer, for example. As for s, t, and u, it is sufficient that at least any one is an integer of 3 or more, but all of the three are preferably an integer of 3 or more, more preferably an integer of 3 to 5, and further preferably 3 or 4.

Specific examples of the compound (C1-1-1) include, as the compounds represented by the formula (10), for example, 1,4-bis[3-(trimethoxysilyl)propyl]piperazine, 1,4-bis[3-(triethoxysilyl)propyl]piperazine, 1,3-bis[3-(trimethoxysilyl)propyl]imidazolidine, 1,3-bis[3-(triethoxysilyl)propyl]imidazolidine, 1,3-bis[3-(trimethoxysilyl)propyl]hexahydropyrimidine, 1,3-bis[3-(triethoxysilyl)propyl]hexahydropyrimidine, 1,3-bis[3-(tributoxysilyl)propyl]-1,2,3,4-tetrahydropyrimidine, and the like; as the compounds represented by the formula (11), for example, 1,3,5-tris(3-trimethoxysilylpropyl) isocyanurate, 1,3,5-tris(3-triethoxysilylpropyl) isocyanurate, 1,3,5-tris(3-tripropoxysilylpropyl) isocyanurate, 1,3,5-tris(3-tributoxysilylpropyl) isocyanurate, and the like, respectively.

Specific examples of the compound (C1-1-2) include, for example, N-[3-(triethoxysilyl)propyl]-2-carbomethoxyaziridine, 3-(2-oxo-1-pyrrolidinyl)-propylmethyldiethoxysilane, and the like.

In addition, as a preferable examples of the compound (C1-2), for example, the compound represented by the following formula (12) and the like may be mentioned. 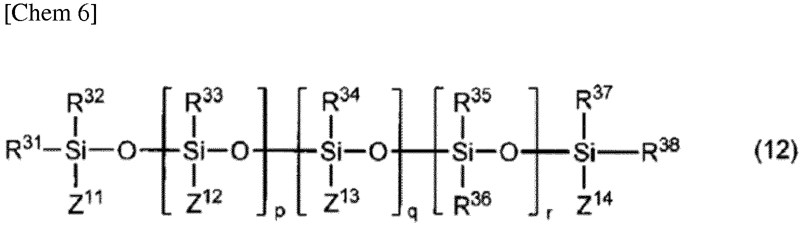 wherein R³¹ to R³⁸ are each independently an alkyl group having 1 to 6 carbon atoms or an aryl group having 6 to 12 carbon atoms; Z¹¹ and Z¹⁴ are each independently a monovalent group having 4 to 12 carbon atoms which has an alkoxy group having 1 to 5 carbon atoms, group having 4 to 12 carbon atoms which has an alkoxy group having 1 to 5 carbon atoms, an aryloxy group having 6 to 14 carbon atoms, or an epoxy group, an alkyl group having 1 to 6 carbon atoms, or an aryl group having 6 to 12 carbon atoms; Z¹² is a monovalent group having 4 to 12 carbon atoms which has an alkoxy group having 1 to 5 carbon atoms, an aryloxy group having 6 to 14 carbon atoms, or an epoxy group, provided that two or more epoxy groups are present in the molecule and the monovalent group having 4 to 12 carbon atoms which has an epoxy group in Z¹¹, Z¹², and Z¹⁴ has a linear structure composed of three of more atoms connected with a single bond; Z¹³ is a monovalent group containing a repeating unit of an alkylene glycol having 2 to 20 carbon atoms; p is an integer of 2 to 200, q is an integer of 0 to 200, and r is an integer of 0 to 200.

Specific examples of the compound represented by the formula (12) include, for example, polyorganosiloxanes having two or more groups "-R^{a}-Q" (provided that R^{a} is an alkylene group having 2 to 10 carbon atoms or a divalent group having an oxygen atom between the carbon-carbon bond of the alkylene group, and Q is an epoxy group) at a side chain (trade name "X-41-1053", trade name "X-41-1059A", trade name "X-41-1056" (all manufactured by Shin-Etsu Chemical Co., Ltd.), etc.) and the like.

Moreover, specific examples of the compound (C1-3) include, for example, poly(oxy-1,2-ethanediyl)-α-methyl-ω-[3-(trichlorosilyl)propoxy], N,N-bis(trimethylsilyl)aminopropylmethyldichlorosilane, N,N-bis(trimethylsilyl)aminopropylethyldichlorosilane, N,N-bis(trimethylsilyl)aminopropyltrichlorosilane, 3-N,N-di(3-methoxy-3-oxopropyl)-aminopropyltriethoxysilane, and the like. Specific examples of the compound (C1-4) include for example, polyethylene glycol diglycidyl ether, pentaerythriol tetraglycidyl ether, tris(4-hydroxyphenyl)methanetriglycidyl ether, N,N,N',N'-tetraglycidyl-4,4'-diaminodiphenylethane, and the like.

Specific examples of the compound (C1-5) include, for example, 3,3'-bis(dimethoxymethylsilyl)propyl ether, 2,2,6,6-tetrachloro-2,6-disilaheptane, and the like; specific examples of the compound (C1-6) include, for example, methyl-2,5-dibenzylideneaminopentanoate, N,N'-dibenzylidene-1,6-diaminohexane, and the like; and specific examples of the compound (C1-7) include, for example, 10-carbomethoxy-n-decanylethyldichlorosilane, carboethoxyadipoyl chloride, 1-(methyldiethoxysilyl)-3-diethylphosphonopropane, 3,3'-bis(diethoxyphosphoryl)dipropylphenyl phosphate, diethylene glycol bis-phosphorodichloridate, 3-N,N-di(3-methoxy-3-oxopropyl)-aminopropyltriethoxysilane, ethyl-8-(dimethoxyphosphoryl)-6-oxooctanoate, 4,4'-di(methoxycarbonylphenyl)-2,2'-bipyridine, and the like, respectively.

As the compound (C1), of the above, it is preferable to use at least one selected from the group consisting of the compound (Cl-1), the compound (C1-2), the compound (C1-3), and the compound (C1-7) and it is more preferable to use at least one selected from the group consisting of the compound (C1-1) and the compound (C1-3). Moreover, in the case where the functional group (a) that interacts with silica is a group containing a nitrogen atom, the compound (C1) is preferably a tertiary amine compound in view of workability of the polymer composition.

Incidentally, as the compound (C1), the above-described ones may be used either singly or as a combination of two or more thereof. Moreover, all the above compounds exemplified as the compound (C1) have a similar action, from the standpoint that they have a functional group that interacts with silica, have a linear structure composed of three or more atoms connected with a single bond, and are capable of binding to a plurality of polymer active ends. Therefore, even one not described in Examples to be described later can be used in the invention.

The above-described modification reaction (coupling reaction) can be performed, for example, as a solution reaction. The solution reaction may be performed with using an unreacted monomer-containing solution after completion of the polymerization reaction in the polymerization step as it is or may be performed after the conjugated diene polymer contained in the solution is isolated and dissolved in a suitable solvent such as cyclohexane. Moreover, the modification reaction may be performed either in a batch system or in a continuous system. At this time, a method of adding the compound (C1) is not particularly limited, and there may be mentioned a method of batch addition, a method of split addition, a method of continuous addition, and the like.

The compound (C1) is a compound capable of binding to a plurality of polymer chains having an active end and functions as a coupling agent. As the coupling agent to be used in the reaction, the compound (C1) may be used singly or, together with the compound (C1), another compound other than the compound (C1) may be used in combination. As the other compound, there can be preferably used a compound (C2) having a functional group S that interacts with silica and capable of binding to a plurality of the polymerization active ends. The compound is more preferably a compound capable of binding the polymerization active end to the functional group S directly or through a single bond, a methylene group, or a linear structure composed of two atoms connected and is further preferably a compound capable of binding the polymerization active end to the functional group S directly. Preferable specific examples of the compound (C2) include, for example, silicon tetrachloride, tin tetrachloride, N,N'-dichloropiperazine, and the like. When these compounds are used in combination, the low fuel consumption performance, workability, and abrasion resistance in the case of application to uses of automobile tires can be further improved.

The amount (sum) of the coupling agent to be used may be appropriately set depending on the kind of the compound to be used but the amount is such an amount that the sum of the functional groups (functional groups (b)), which are possessed by the coupling agent, capable of reacting with the polymerization active end becomes preferably 0.1 mol or more and more preferably 0.2 mol or more relative to 1 mol of the metal atom participating in the polymerization reaction, which is possessed by the polymerization initiator. By controlling the sum to 0.1 mol or more, the coupling reaction can be sufficiently allowed to proceed and an effect of improving workability and abrasion resistance can be enhanced. Moreover, in view of suppressing the deterioration of workability and in view of enhancing the dispersibility of silica by the modification reaction through the second modification step to be mentioned later, the amount (sum) of the coupling agent to be used is such an amount that the sum of the functional groups (b) existing in the reaction system becomes preferably less than 1.0 mol, more preferably 0.8 mol or less, and further preferably 0.6 mol or less relative to 1 mol of the metal atom participating in the polymerization reaction, which is possessed by the polymerization initiator.

In order to further increase the dispersibility of silica, the amount of the compound (C1) to be used is preferably 0.1 mol or more, more preferably 0.3 mol or more, and further preferably 0.5 mol or more relative to 1 mol of the sum of the compound (C1) and the compound (C2). Moreover, in order to obtain an effect of improving the tire properties by the combined use of the compound (C1) and the compound (C2) suitably, the amount of the compound (C2) to be used is preferably 0.05 mol or more and more preferably 0.1 mol or more relative to 1 mol of the sum of the compound (C1) and the compound (C2).

The temperature of the coupling reaction is usually the same as the above-described polymerization reaction temperature, and it is preferably from -20 to 150°C, more preferably from 0 to 120°C, and particularly preferably from 20 to 100°C. When the reaction temperature is too low, the viscosity of the modified conjugated diene polymer solution tends to increase. On the other hand, when the reaction temperature is too high, the polymerization active end is prone to be deactivated. The reaction time is preferably from 1 minute to 5 hours and more preferably from 2 minutes to 1 hour.

### <Second Modification Step>

The production method of the invention may include a step (second modification step) wherein an active end of the conjugated diene polymer obtained in the above polymerization is reacted with a compound (M) having a functional group that interacts with silica and capable of binding to one polymerization active end. By the step, the functional group that interacts with silica can be introduced into a polymerization termination end of the conjugated diene polymer.

The compound (M) is not particularly limited as long as it has a functional group that interacts with silica and is capable of reacting with one polymerization active end and the compound can be appropriately selected from compounds hitherto used as an end-modifying agent of the conjugated diene polymer having an active end and used. Herein, the "functional group that interacts with silica" means a group having at least one atom that interacts with silica, such as a nitrogen atom, a sulfur atom, a phosphorus atom, or an oxygen atom.

As the compound (M), particularly, an alkoxysilane compound represented by the following formula (1) can be preferably used. 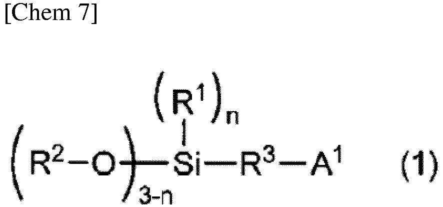 wherein A¹ is a monovalent functional group which has at least one atom selected from the group consisting of a nitrogen atom, a phosphorus atom, and a sulfur atom, does not have an active hydrogen, and binds to R³ with a nitrogen atom, a phosphorus atom, or a sulfur atom; R¹ and R² are a hydrocarbyl group, R³ is a hydrocarbylene group, and n is an integer of 0 to 2, provided that R¹ and R² may be the same or different from each other, in the case where n is 1, a plurality of R²'s may be the same or different from each other, and in the case where n is 2, a plurality of R¹'s may be the same or different from each other.

The hydrocarbyl groups of R¹ and R² of the formula (1) are preferably a linear or branched alkyl group having 1 to 20 carbon atoms, an alkenyl group having 2 to 20 carbon atoms, a cycloalkyl group having 3 to 20 carbon atoms, an aryl group having 6 to 20 carbon atoms, or an aralkyl group.

R³ is preferably a linear or branched alkanediyl group having 1 to 20 carbon atoms, an alkenediyl group having 2 to 20 carbon atoms, a cycloalkylene group having 3 to 20 carbon atoms, or an arylene group having 6 to 20 carbon atoms.

n is preferably 0 or 1 from the standpoint of increasing the reactivity with the conjugated diene polymer having an active end,

A¹ has at least one atom selected from the group consisting of a nitrogen atom, a phosphorus atom, and a sulfur atom and binds to R³ with the atom. A protective group such as a trisubstituted hydrocarbylsilyl group may be bound to the nitrogen atom, the phosphorus atom, or the sulfur atom contained in A¹. Incidentally, the "active hydrogen" herein means a hydrogen atom bound to an atom other than a carbon atom, and preferably, means one having lower bond energy than that of a carbon-hydrogen bond of polymethylene.

A¹ is preferably a group capable of becoming an onium ion by the action of an onium salt-forming agent. When the alkoxysilane compound has such a group (A¹), excellent shape-retaining properties can be imparted to the modified conjugated diene polymer.

Specific examples of A¹ include a nitrogen-containing group in which two hydrogen atoms of a primary amino group are substituted with two protective groups, a nitrogen-containing group in which one hydrogen atom of a secondary amino group is substituted with one protective group, a tertiary amino group, an imino group, a pyridyl group, a phosphorus-containing group in which two hydrogen atoms of a primary phosphino group are substituted with two protective groups, a phosphorus-containing group in which one hydrogen atom of a secondary phosphino group is substituted with one protective group, a tertiary phosphino group, a sulfur-containing group in which one hydrogen atom of a thiol is substituted with one protective group, and the like. Of these, from the standpoint of good affinity to silica, A¹ is preferably a group having a nitrogen atom. Incidentally, the "protective group" herein is a functional group that converts A¹ into an inactive functional group to polymerization active end and, for example, a trisubstituted hydrocarbylsilyl group and the like may be mentioned.

As specific examples of the alkoxysilane compound represented by the formula (1), there may be mentioned, as compounds having a nitrogen-containing group in which two hydrogen atoms of a primary amino group are substituted with two protective groups, a nitrogen-containing group in which one hydrogen atom of a secondary amino group is substituted with one protective group, or a tertiary amino group and an alkoxysilyl group, for example, N,N-bis(trimethylsilyl)aminopropyltrimethoxysilane, N,N-bis(trimethylsilyl)aminopropylmethyldiethoxysilane, N,N',N'-tris(trimethylsilyl)-N-(2-aminoethyl)-3-aminopropyltriethoxysilane, 1-(3-triethoxysilylpropyl)-2,2,5,5-tetramethyl-1-aza-2,5-disilacyclopentane, 1-trimethylsilyl-2,2-dimethoxy-1-aza-2-silacyclopentane, N-[3-(trimethoxysilyl)-propyl]-N,N'-diethyl-N'-trimethylsilyl-ethane-1,2-diamine, N-[3-(methyldimethoxysilyl)-propyl]-N,N'-diethyl-N'-trimethylsilyl-p-phenylenediamine, 3-[3-(trimethylsilylethylamino)-1-pyrrolidinyl]-propyl-methyldiethoxysilane, N-[3-(diethoxymethylsilyl)-propyl]-N-ethyl-N'-(2-ethoxyethyl)-N'-trimethylsilyl-ethane-1,2-diamine, 3-(4-trimethylsilyl-1-piperazino)propylmethyldimethoxysilane, N-trimethylsilyl-N-methylaminopropylmethyldiethoxysilane, 3-(4-trimethylsilyl-1-piperazino)propyltriethoxysilane, N-[2-(trimethoxysilyl)-ethyl]-N,N',N'-trimethylethane-1,2-diamine, 1-[3-(triethoxysilyl)-propyl]-4-methylpiperazine, 1-[3-(trimethoxysilyl)-propyl]-3-methylimidazolidine, 2-(3-trimethoxysilyl-propyl)-1,3-dimethylimidazolidine, 1-[3-(triethoxysilyl)-propyl]-3-methylhexahydropyrimidine, 3-[3-(tributoxysilyl)-propyl]-1-methyl-1,2,3,4-tetrahydropyrimidine, 1-(2-ethoxyethyl)-3-[3-(trimethoxysilyl)-propyl]-imidazolidine, 2-{3-[3-(trimethoxysilyl)-propyl)-tetrahydropyrimidine-1-yl}-ethyldimethylamine, 2-(trimethoxysilyl)-1,3-dimethylimidazolidine, 2-(triethoxysilyl)-1,4-diethylpiperazine, 5-(triethoxysilyl)-1,3-dipropylhexahydropyrimidine, 5-(diethoxyethylsilyl)-1,3-diethylhexahydropyrimidine, 2-[3-(2-dimethylaminoethyl)-2-(3-ethyldimethoxysilyl-propyl)-imidazolidine-1-yl]-ethyl-dimethylamine, 5-(3-trimethoxysilyl-propyl)-1,3-bis-(2-methoxyethyl)-hexahydropyrimidine, 3-dimethylaminopropyltrimethoxysilane, 3-dimethylaminopropylmethyldimethoxysilane, 3-morpholinopropylmethyldimethoxysilane, 3-piperidinopropyltrimethoxysilane, 3-piperidinopropylmethyldimethoxysilane, bis[3-(triethoxysilyl)propyl]trimethylsilylamine, compounds in which the alkyl group and/or the alkanediyl group in the above-mentioned compounds are replaced with an alkyl group having 1 to 6 carbon atoms and/or an alkanediyl group having 1 to 6 carbon atoms, respectively, and the like.

Of these, examples of preferable compounds include N,N-bis(triethylsilyl)aminopropylmethyldimethoxysilane, N,N-bis(trimethylsilyl)aminopropylmethyldimethoxysilane, N,N-bis(trimethylsilyl)aminopropylmethyldiethoxysilane, N,N-bis(trimethylsilyl)aminopropyltriethoxysilane, 1-(3-triethoxysilylpropyl)-2,2,5,5-tetramethyl-l-aza-2,5-disilacyclopentane, N,N',N'-tris(trimethylsilyl)-N-(2-aminoethyl)-3-aminopropyltriethoxysilane, 1-trimethylsilyl-2,2-dimethoxy-1-aza-2-silacyclopentane, N-[3-(trimethoxysilyl)-propyl]-N,N'-diethyl-N'-trimethylsilyl-ethane-1,2-diamine, N-[3-(triethoxysilyl)-propyl]-N,N'-diethyl-N'-trimethylsilyl-ethane-1,2-diamine, N-trimethylsilyl-N-methylaminopropylmethyldiethoxysilane, 3-(4-trimethylsilyl-1-piperazino)propyltriethoxysilane, N-[2-(trimethoxysilyl)-ethyl]-N,N',N'-trimethylethane-1,2-diamine, 1-[3-(triethoxysilyl)-propyl]-4-methylpiperazine, 2-(trimethoxysilyl)-1,3-dimethylimidazolidine, 2-(3-trimethoxysilyl-propyl)-1,3-dimethylimidazolidine, 3-dimethylaminopropyltrimethoxysilane, 3-diethylaminopropyltrimethoxysilane, 3-dimethylaminopropyltrimethoxysilane, 3 -diethylaminopropyltrimethoxysilane, 3-dimethylaminopropyltriethoxysilane, 3-diethylaminopropyltriethoxysilane, bis[3-(triethoxysilyl)propyl]trimethylsilylamine, bis[3-(trimethoxysilyl)propyl]trimethylsilylamine, and the like.

As compounds having the imino group or the pyridyl group and the alkoxysilyl group, there may be mentioned N-(1,3-dimethylbutylidene)-3-(triethoxysilyl)-1-propaneamine, N-(1-methylpropylidene)-3-(triethoxysilyl)-1-propaneamine, N-(4-N,N-dimethylaminobenzylidene)-3-(triethoxysilyl)-1-propaneamine, N-(cyclohexylidene)-3-(triethoxysilyl)-l-propaneamine, and trimethoxysilyl compounds, methyldiethoxysilyl compounds and ethyldimethoxysilyl compounds corresponding to these triethoxysilyl compounds, N-(3-trimethoxysilylpropyl)-4,5-dihydroimidazole, N-(3-triethoxysilylpropyl)-4,5-dihydroimidazole, N-(3 -trimethoxysilylpropyl)-4,5-imidazole, N-(3-triethoxysilylpropyl)-4,5-imidazole, 3-hexamethyleneiminopropyltrimethoxysilane, 3-hexamethyleneiminopropylmethyldimethoxysilane, and compounds in which the alkyl group and/or the alkanediyl group in the above-mentioned compounds are replaced with an alkyl group having 1 to 6 carbon atoms and/or an alkanediyl group having 1 to 6 carbon atoms, respectively, and the like.

Of these, examples of preferable compounds include N-(1,3-dimethylbutylidene)-3 -(triethoxysilyl)-1 -propaneamine, N-(1-methylpropylidene)-3 -(triethoxysilyl)-1 - propaneamine, N-(3 -trimethoxysilylpropyl)-4,5-dihydroimidazole, N-(3-triethoxysilylpropyl)-4,5-dihydroimidazole, N-(3-trimethoxysilylpropyl)-4,5-imidazole, N-(3-triethoxysilylpropyl)-4,5-imidazole, and the like.

As the compounds having a phosphorus-containing group in which two hydrogen atoms of a primary phosphino group are substituted with two protective groups, a phosphorus-containing group in which one hydrogen atom of a secondary phosphino group is substituted with one protective group, a tertiary phosphino group, or a sulfur-containing group in which one hydrogen atom of a thiol group is substituted with one protective group and an alkoxysilyl group, there may be mentioned P,P-bis(trimethylsilyl)phosphinopropylmethyldimethoxysilane, P,P-bis(trimethylsilyl)phosphinopropyltrimethoxysilane, 3-dimethylphosphinopropyltrimethoxysilane, 3-dimethylphosphinopropylmethyldimethoxysilane, 3-diphenylphosphinopropyltrimethoxysilane, 3 -diphenylphosphinopropyltriethoxysilane, 3-diphenylphosphinopropylmethyldimethoxysilane, S-trimethylsilylmercaptopropylmethyldimethoxysilane, S-trimethylsilylmercaptopropyltrimethoxysilane, S-trimethylsilylmercaptopropylmethyldiethoxysilane, compounds in which the alkyl group and/or the alkanediyl group in the above-mentioned compounds are replaced with an alkyl group having 1 to 6 carbon atoms and/or an alkanediyl group having 1 to 6 carbon atoms, respectively, and the like.

Of these, examples of preferable compounds include 3-diphenylphosphinopropyltrimethoxysilane, 3-diphenylphosphinopropyltriethoxysilane, S-trimethylsilylmercaptopropylmethyldimethoxysilane, S-trimethylsilylmercaptopropyltrimethoxysilane, S-trimethylsilylmercaptopropyltriethoxysilane, S-trimethylsilylmercaptopropylmethyldiethoxysilane, and the like.

Incidentally, from the standpoint that the above compounds exemplified as the alkoxysilane compound represented by the above formula (1) can afford a modified conjugated diene polymer having a modified polymerization termination end, all the compounds have similar activity. Therefore, even one not described in Examples to be described later can be used in the invention.

The modification reaction (hereinafter also referred to as "end modification reaction") in the second modification step can be performed, for example, as a solution reaction. The solution reaction may be performed at a timing after the polymerization step and before the first modification step or may be performed after the polymerization step and the first modification step. Preferred is the latter. The end modification reaction may be performed with using an unreacted monomer-containing solution after completion of the polymerization reaction as it is or may be performed after the conjugated diene polymer contained in the solution is isolated and dissolved in a suitable solvent such as cyclohexane. Moreover, the end modification reaction may be performed either in a batch system or in a continuous system. At this time, a method of adding the compound (M) is not particularly limited, and there may be mentioned a method of batch addition, a method of split addition, a method of continuous addition, and the like.

The amount of the compound (M) to be used in the end modification reaction is preferably 0.1 mol or more and more preferably 0.15 mol or more relative to 1 mol of the metal atom participating in the polymerization reaction, which is possessed by the polymerization initiator. When the amount is controlled to 0.1 mol or more, the end modification reaction can be allowed to proceed sufficiently and the dispersibility of silica can be suitably improved. Moreover, an upper limit of the amount of the compound (M) to be used can be appropriately set depending on the timing at which the end modification reaction is performed. For example, in the case where the end modification reaction is performed before the first modification step, in view of the proceeding of the coupling reaction through the first modification step, the amount of the compound (M) to be used is less than 1.0 mol, preferably 0.8 mol or less, and more preferably 0.6 mol or less relative to 1 mol of the metal atom participating in the polymerization reaction, which is possessed by the polymerization initiator. On the other hand, in the case where the end modification reaction is performed after the first modification reaction, in view of decreasing an unreacted matter in the solution after the end modification reaction, the amount is preferably 1.2 mol or less and more preferably 0.8 mol or less relative to 1 mol of the metal atom participating in the polymerization reaction, which is possessed by the polymerization initiator.

The temperature of the end modification reaction is usually the same as the above-described polymerization reaction temperature, and it is preferably from -20 to 150°C, more preferably from 0 to 120°C, and particularly preferably from 20 to 100°C. When the reaction temperature is low, the viscosity of the modified conjugated diene polymer solution tends to increase. On the other hand, when the reaction temperature is high, the polymerization active end is prone to be deactivated. The reaction time is preferably from 1 minute to 5 hours and more preferably from 2 minutes to 1 hour.

According to the above-described production method, for example, the following [a] to [c] are provided as preferable embodiments.
[a] An embodiment comprising a step of polymerizing a monomer using a polymerization initiator including the metal amide compound and a step of reacting at least a part of the active end of the modified conjugated diene polymer obtained by the polymerization with the compound (C1).
[b] An embodiment comprising a step of polymerizing a monomer using a polymerization initiator including the metal amide compound, a step of reacting a part of the active end of the modified conjugated diene polymer obtained by the polymerization with the compound (C1), and a step of reacting a part of the active end of the modified conjugated diene polymer obtained by the polymerization with the compound (M).
[c] An embodiment comprising a step of polymerizing a monomer using a polyfunctional lithium compound as a polymerization initiator, a step of reacting a part of the active end of the conjugated diene polymer obtained by the polymerization with the compound (C1), and a step of reacting a part of the active end of the conjugated diene polymer obtained by the polymerization with the compound (M).

By any of these embodiments, a modified conjugated diene polymer having all of the low hysteresis loss performance, workability, and abrasion resistance can be obtained. Particularly, it is preferable to adopt the embodiment [b] or the embodiment [c].

For isolating the modified conjugated diene polymer contained in the reaction solution, isolation can be performed, for example, by a known solvent removal method such as steam stripping and a drying operation such as a heat treatment. With regard to the modified conjugated diene polymer thus obtained, the Mooney viscosity may be adjusted by adding an extender oil or the like, as needed. By the treatment, workability can be improved. As the extender oil, there may be, for example, mentioned aroma oils, naphthenic oils, paraffin oils, and the like. The amount of the extender oil to be blended may be appropriately set depending on the monomer or the like to be used in the polymerization but is, for example, from 10 to 50 parts by mass based on 100 parts by mass of the modified conjugated diene polymer.

### [2] Modified Conjugated Diene Polymer

The modified conjugated diene polymer of the invention has a plurality of polymer chains containing a repeating unit based on a conjugated diene compound, wherein one end of the polymer chain is bound to a binding portion having a functional group (a) that interacts with silica and a linear structure composed of three or more atoms connected with a single bond. Moreover, the polymer has a functional group (c) that interacts with silica in at least a part of the end portion on the side that is not bound to the binding portion in a plurality of the polymer chains.

Preferably, the modified conjugated diene polymer of the invention has a plurality of polymer chains containing a repeating unit based on a conjugated diene compound, wherein a plurality of the polymer chains are each bound to the functional group (a) that interacts with silica through a linear structure composed of three or more atoms connected with a single bond, and has a functional group (c) that interacts with silica in at least a part of the end portion on the side that is not bound to the linear structure in a plurality of the polymer chains.

The modified conjugated diene polymer of the invention can be obtained by using any of the methods of the embodiments [a] to [c] in the method for producing a modified conjugated diene polymer of the invention as described in the above.

The modified conjugated diene polymer of the invention is preferably branched or radial one having a plurality of polymer chains extending from the linear structures as starting points and preferably has the functional group (c) at each end of the branched or radial polymer chains. In the case of using the method of the embodiment [a] or [b], the functional group (c) is the nitrogen-containing group possessed by the polymerization initiator (metal amide compound). Moreover, in the case of using the method of the embodiment [c], the functional group is the functional group (e.g., the group "A1" of the formula (1)) possessed by the compound (M) as an end-modifying agent. Incidentally, the explanation of the compound (C1) can be applied to the explanation of the linear structure.

The weight-average molecular weight (Mw) of the modified conjugated diene polymer of the invention in terms of polystyrene on GPC varies depending on the kind of the compound (C1) to be used but is preferably from 1.0×10⁵ to 5.0×10⁶. When Mw is smaller than 1.0×10⁵, the low fuel consumption performance and abrasion resistance tend to easily decrease in a crosslinked polymer obtained using a polymer composition containing the modified conjugated diene polymer of the invention. When Mw is larger than 5.0×10⁶, the workability of the polymer composition tends to easily decrease. Mw is more preferably from 1.2×10⁵ to 3.5×10⁶ and further preferably from 1.5×10⁵ to 3.0×10⁶. The modified conjugated diene polymer obtained as described above may be further subjected to hydrogenation by a known method.

### [3] Polymer Composition

### (Polymer Components)

The polymer composition of the invention contains the modified conjugated diene polymer (hereinafter also referred to as specific polymer) obtained by the production method of the invention as a polymer component.

The content ratio of the specific polymer in the polymer composition is preferably 20% by mass or more, more preferably 30% by mass or more, and particularly preferably 40% by mass or more based on the total amount of the polymer composition. When the ratio is 20% by mass or more, mechanical properties such as tensile strength and tensile elongation, crack growth resistance, and abrasion resistance of the crosslinked polymer can be made more satisfactory.

The polymer composition of the invention may contain, as a polymer component, another polymer component other than the above-described specific polymer. As the other polymer component, there may be, for example, mentioned natural rubber, synthetic isoprene rubber, butadiene rubber, modified butadiene rubber, styrene-butadiene rubber, modified styrene-butadiene rubber, ethylene-α-olefin copolymerized rubber, ethylene-α-olefin-diene copolymerized rubber, acrylonitrile-butadiene copolymerized rubber, chloroprene rubber, halogenated butyl rubber, styrene-isoprene copolymerized rubber, butadiene-isoprene copolymer rubber, random styrene-butadiene-isoprene copolymerized rubber, styrene-acrylonitrile-butadiene copolymerized rubber, acrylonitrile-butadiene copolymerized rubber, and polystyrene-polybutadiene-polystyrene block copolymers, and mixtures thereof and the like.

### (Silica)

The polymer composition of the invention contains silica as a reinforcing agent. Specific examples of the silica include wet silica (hydrated silicic acid), dry silica (silicic acid anhydride), colloidal silica, precipitated silica, calcium silicate, aluminum silicate, and the like. Of these, wet silica is particularly preferable in view of an effect of improving fracture resistance and an effect of achieving both of wet grip properties and low rolling resistance. Furthermore, the use of high dispersible type silica is also preferable from the standpoint of achieving satisfactory dispersibility in the polymer composition and improving physical properties and workability. The silicas may be used either singly or as a combination of two or more thereof.

The polymer composition of the invention may contain, as a reinforcing agent, carbon black as needed, together with silica. When carbon black is used, an effect of improving grip performance and fracture resistance of the crosslinked polymer is enhanced. Specific examples of carbon black include respective grades of carbon black such as furnace black represented by SRF, GPF, FEF, HAF, ISAF, SAF, ISAF-HS, ISAF-LS, IISAF-HS, HAF-HS and HAF-LS, acetylene black, thermal black, channel black, graphite, and also graphite fiber and fullerene. Of these, carbon black having an iodine adsorption amount (IA) of 60 mg/g or more and a dibutyl phthalate oil absorption amount (DBP) of 80 ml/100 g or more is preferable. Furthermore, from the standpoint of improving abrasion resistance of the crosslinked polymer, HAF, ISAF and SAF are particularly preferable among the above. Incidentally, the carbon blacks may be used either singly or as a combination of two or more thereof.

The total amount of silica and carbon black in the polymer composition of the invention is preferably from 20 to 130 parts by mass and more preferably from 25 to 110 parts by mass based on 100 parts by mass of the total of the polymer components contained in the polymer composition. The reasons are as follows: when the amount of the reinforcing agent is small, the effect of improving the fracture resistance and the like tends to become insufficient, while when the amount of the reinforcing agent is large, the workability of the polymer composition tends to decrease. Furthermore, by blending a carbon-silica dual phase filler into the polymer composition of the invention, an excellent advantage similar to that in the case where silica and carbon black are used in combination can be obtained. The carbon-silica dual phase filler is a so-called silica-coating-carbon black in which silica is chemically bound to the surface of carbon black, and is marketed by Cabot Corporation with the trade names of CRX2000, CRX2002, and CRX2006. The amount of the carbon-silica dual phase filler to be blended is preferably from 1 to 100 parts by mass and more preferably from 5 to 95 parts by mass based on 100 parts by mass of the by mass and more preferably from 5 to 95 parts by mass based on 100 parts by mass of the total of the polymer components.

### (Silane Coupling Agent)

In the case where silica is contained as a reinforcing agent in the polymer composition of the invention, it is preferable to blend a silane coupling agent in order to further improve the reinforcing effect. Examples of the silane coupling agent include bis(3-triethoxysilylpropyl) tetrasulfide, bis(3-triethoxysilylpropyl) trisulfide, bis-(3-triethoxysilylpropyl) disulfide, bis(2-triethoxysilylethyl) tetrasulfide, bis(3-trimethoxysilylpropyl) tetrasulfide, bis(2-trimethoxysilylethyl) tetrasulfide, 3-mercaptopropyltrimethoxysilane, 3 -mercaptopropyltriethoxysilane, 2-mercaptoethyltrimethoxysilane, 2-mercaptoethyltriethoxysilane, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, 3-trimethoxysilylpropylbenzothiazolyl tetrasulfide, 3-triethoxysilylpropylbenzolyl tetrasulfide, 3-triethoxysilylpropyl-methacrylate monosulfide, 3 -trimethoxysilylpropyl-methacrylate monosulfide, bis(3-diethoxymethylsilylpropyl) tetrasulfide, 3-mercaptopropyldimethoxymethylsilane, dimethoxymethylsilylpropyl-N,N-dimethylthiocarbamoyl tetrasulfide, dimethoxymethylsilylpropylbenzothiazolyl tetrasulfide, mercaptosilane compounds exemplified in JP-A-2006-249069, and the like.

Examples of commercially available products include trade names "NXT Silane", "NXT Z Silane", "NXT-Low-V Silane" and "NXT Ultra Low-V Silane" manufactured by Momentive Performance Materials Inc., a trade name "VP Si363" manufactured by Degussa AG, a trade name "11-MERCAPTOUNDECYLTRIMETHOXYSILANE" manufactured by Gelest, Inc., and the like.

Of these, in view of an effect of improving reinforcing properties and the like, bis(3-triethoxysilylpropyl) polysulfide, 3-trimethoxysilylpropylbenzothiazyl tetrasulfide, and the mercaptosilane compounds exemplified in JP-A-2006-249069 are preferable. Incidentally, these silane coupling agents may be used either singly or as a combination of two or more thereof.

The amount of the silane coupling agent to be blended is preferably from 1 to 20 parts by mass and more preferably from 3 to 15 parts by mass based on 100 parts by mass of the silica contained in the polymer composition, although the amount varies depending on the kind and the like of the silane coupling agent. When the amount of the silane coupling agent to be blended is less than 1 part by mass, there is a tendency that the effect as the silane coupling agent is difficult to obtain sufficiently. When the amount exceeds 20 parts by mass, the polymer components tend to gel easily.

In the preparation of the polymer composition of the invention, a compatibilizing agent can be added at the time of kneading for the purpose of improving workability in kneading or further improving a balance among wet skid resistance, low hysteresis loss properties, and abrasion resistance. Preferable examples of the compatibilizing agent include organic compounds selected from epoxy group-containing compounds, carboxylic acid compounds, carboxylic acid ester compounds, ketone compounds, ether compounds, aldehyde compounds, hydroxyl group-containing compounds and amino group-containing compounds, and silicon compounds selected from alkoxysilane compounds, siloxane compounds and aminosilane compounds.

Among the compatibilizing agents, specific examples of the organic compounds include, as the epoxy group-containing compounds, for example, butyl glycidyl ether, diglycidyl ether, propylene oxide, neopentyl glycol diglycidyl ether, epoxy resins, epoxidized soybean oils, epoxidized fatty acid esters, and the like; as the carboxylic acid compounds, for example, adipic acid, octylic acid, methacrylic acid, and the like; as the carboxylic acid ester compounds, for example, acrylic acid esters, diethylene acrylate, ethyl methacrylate, orthoacetic acid esters, ethyl acetoacetate, butyl acetate, isopropyl acetate, dimethyl carbonate, p-hydroxyphenyl acetate, polyester-based plasticizers, stearic acid-based plasticizers, and the like; as the ketone compounds, for example, methylcyclohexanone, acetylacetone, and the like; as the ether compounds, for example, isopropyl ether, dibutyl ether, and the like; as the aldehyde compounds, for example, undecylene aldehyde, decyl aldehyde, vanillin, 3,4-dimethoxybenzaldehyde, cuminaldehyde, and the like; as amino group-containing compounds, for example, isopropylamine, diisopropylamine, triethylamine, 3-ethoxypropylamine, 2-ethylhexylamine, isopropanolamine, N-ethylethylenediamine, ethyleneimine, hexamethylenediamine, 3-lauryloxypropylamine, aminophenol, aniline, 3-isopropoxyaniline, phenylenediamine, aminopyridine, N-methyldiethanolamine, N-methylethanolamine, 3-amino-1-propanol, ethylamine hydrochloride, n-butylamine hydrochloride, and the like; as the hydroxyl group-containing compounds, for example, isopropyl alcohol, butanol, octanol, octanediol, ethylene glycol, methylcyclohexanol, 2-mercaptoethanol, 3-methyl-3-methoxy-1-butanol, 3-methyl-1,5-pentanediol, 1-octadecanol, diethylene glycol, butylene glycol, dibutylene glycol, triethylene glycol, and the like. Of these, the epoxy group-containing compounds, the amino group-containing compounds, and the hydroxyl group-containing compounds are preferable.

Moreover, specific examples of the silicon compounds include, as the alkoxysilane compounds, for example, trimethylmethoxysilane, trimethylethoxysilane, dimethyldimethoxysilane, methyltriethoxysilane, methyltriphenoxysilane, tetraethoxysilane, methyldiethoxysilane, vinyltrimethoxysilane, and the like; as the siloxane compounds, for example, dimethylsiloxane oligomers, silicone oils, amino-modified silicone oils, epoxy-modified silicone oils, carboxyl-modified silicone oils, polyether-modified silicone oils, alkyl-modified silicone oils, higher fatty acid ester-modified silicone oils, higher alkoxy-modified silicone oils, higher fatty acid-containing silicone oils, and the like; and as the aminosilane compounds, for example, hexamethyldisilazane, nonamethyltrisilazane, anilitrimethylsilane, bis(dimethylamino)dimethylsilane, bis(diethylamino)dimethylsilane, triethylaminosilane, and the like. Of these, silazane compounds and bis(dimethylamino)dimethylsilane are preferable.

### (Vulcanizing Agent)

The polymer composition of the invention contains a vulcanizing agent (crosslinking agent). As the vulcanizing agents, sulfur, sulfur halides, organic peroxides, quinone dioximes, organic polyvalent amine compounds, methylol group-containing alkylphenol resins, and the like are mentioned. As the vulcanizing agent, sulfur is usually used. The amount of sulfur to be blended is preferably from 0.1 to 5 parts by mass and more preferably from 0.5 to 3 parts by mass based on 100 parts by mass of the total of the polymer components contained in the polymer composition.

The polymer composition of the invention may contain various chemicals, additives, and the like which are commonly used in the rubber industry, as desired. Examples of such chemicals or additives include vulcanizing aids, processing aids, vulcanizing accelerators, process oils, anti-aging agents, anti-scorching agents, zinc white, stearic acid, and the like.

Here, as the vulcanizing aid and the processing aid, stearic acid is usually used. The amount of the vulcanizing aid and the processing aid to be blended is usually from 0.5 to 5 parts by mass based on 100 parts by mass of the total of the polymer components contained in the polymer composition.

Although the vulcanizing accelerator is not particularly limited, examples thereof include sulfenamide-based, guanidine-based, thiuram-based, thiourea-based, thiazole-based, dithiocarbamic acid-based, and xanthogenic acid-based compounds, and preferably include 2-mercaptobenzothiazole, dibenzothiazyl disulfide, N-cyclohexyl-2-benzothiazylsulfenamide, N-t-butyl-2-benzothiazolesulfenamide, N-oxyethylene-2-benzothiazolesulfenamide, N-oxyethylene-2-benzothiazolesulfenamide, N,N'-diisopropyl-2-benzothiazolesulfenamide, diphenylguanidine, diorthotolylguanidine, orthotolylbisguanidine, and the like. The amount of the vulcanizing accelerator to be blended is usually from 0.1 to 5 parts by mass and preferably from 0.4 to 4 parts by mass based on 100 parts by mass of the total of the polymer components contained in the polymer composition.

The polymer composition of the invention can be produced by kneading the polymer components, silica and the crosslinking agent and also components to be blended as needed, using a kneader such as an open type kneader (e.g., a roll) or a closed type kneader (e.g., a Banbury mixer). Furthermore, the polymer composition of the invention is applicable as a crosslinked polymer to various rubber products by performing crosslinking (vulcanization) after molding. For example, the polymer composition is applicable to uses in tires such as tire treads, under treads, carcasses, side walls, and bead portions; and uses in rubber cushions, fenders, belts, hoses, other industrial products, and the like. Of these, the polymer composition can be suitably used, particularly as a rubber for tire treads, from the standpoint of providing low fuel consumption performance.

### Examples

The present invention will be specifically described below on the basis of Examples but the invention is not construed as being limited to these Examples. Incidentally, "parts" and "%" in Examples, Comparative Examples, and Reference Examples are by mass basis unless otherwise specified. Moreover, measuring methods of various physical property values of the modified conjugated diene polymers are as follows.
- Bound styrene content [%]: it was determined by ¹H-NMR of 500 MHz.
- Vinyl content [%]: it was determined by ¹H-NMR of 500 MHz.
- Weight-average molecular weight before modification: it was determined in terms of polystyrene from the retention time corresponding to the maximum peak height of a GPC curve obtained using gel permeation chromatography (trade name "HLC-8120GPC" manufactured by Tosoh Corporation), under the following conditions.
   Column: trade name "GMHXL" (manufactured by Tosoh Corporation), 2 columns
   Column temperature: 40°C
   Mobile phase: tetrahydrofuran
   Flow rate: 1.0 ml/minute
   Sample concentration: 10 mg/20 ml

### [Reference Example 1]

### <Synthesis of Modified Conjugated Diene Polymer P1 Using Monolithium Initiator>

In an autoclave reactor having an internal volume of 5 liters in which the atmosphere was replaced with nitrogen, 2,500 g of cyclohexane as a solvent, 2.45 mmol of 2,2-di(2-tetrahydrofuryl)propane as a vinyl content adjuster (randomizer), 125 g of styrene, and 365 g of 1,3-butadiene as monomers were charged. After adjusting the temperature of contents in the reactor to 10°C, 5.20 mmol of n-butyllithium was added as a polymerization initiator thereto to initiate polymerization. The polymerization was conducted under adiabatic conditions, and the maximum temperature reached 85°C. At the time when the polymerization conversion reached 99% (after an elapse of time of 22 minutes from the initiation of the polymerization), 10 g of 1,3-butadiene was further added over a period of 2 minutes, and the polymerization was further conducted for 3 minutes. Thereafter, 0.35 mmol of 1,4-bis[3-(trimethoxysilyl)propyl]piperazine (CP1-1) (an amount such that the number of the alkoxy group derived from CP-1-1 existing in the reaction system corresponds to 0.4 molar equivalents to the active end of the conjugated diene polymer obtained by the polymerization reaction) was added as a coupling agent, followed by performing a reaction for 15 minutes.

Then, 2.08 mmol (corresponding to 0.4 molar equivalents to the active end of the conjugated diene polymer obtained by the polymerization reaction) of N,N-bis(trimethylsilyl)aminopropylmethyldiethoxysilane as an end-modifying agent was added thereto, followed by performing a reaction for 15 minutes. To the resulting polymer solution, 2.0 g of 2,6-di-tert-butyl-p-cresol was added. Then, solvent removal was conducted by performing steam striping with using hot water adjusted to pH 9 with sodium hydroxide, thereby obtaining a modified conjugated diene polymer. Thereafter, the resulting polymer was dried by means of a hot roll adjusted to a temperature of 110°C to obtain a modified conjugated diene polymer P1.

### <Production of Polymer Composition and Crosslinked Polymer>

Using the above modified conjugated diene polymer P1, a polymer composition was produced by blending individual components according to the blending formulation shown in the following Table 1 and kneading them. The kneading was performed by the following method. Using a plastomill (internal volume: 250 ml) equipped with a temperature controller, the modified conjugated diene polymer, butadiene rubber, an extender oil, silica, carbon black, a silane coupling agent, stearic acid, an anti-aging agent, and zinc oxide were blended and kneaded under conditions of a filling rate of 72% and a rotation number of 60 rpm, as first-step kneading. Subsequently, the blended product obtained above was cooled to room temperature and thereafter, kneaded with blending sulfur and a vulcanizing accelerator, as second-step kneading. This was molded, and vulcanized at 160°C for a predetermined time by means of a vulcanizing press to obtain a crosslinked polymer (vulcanized polymer).

**[Table 1]**

| Blending formulation | Parts by mass |
|---|---|
| Modified conjugated diene polymer | 70 |
| Butadiene rubber *1 | 30 |
| Extender oil *2 | 37.5 |
| Silica *3 | 70 |
| Carbon black *4 | 5.6 |
| Silane coupling agent *5 | 5.6 |
| Stearic acid | 2 |
| Anti-aging agent *6 | 1 |
| Zinc oxide | 3 |
| Vulcanizing accelerator D *7 | 1.5 |
| Vulcanizing accelerator CZ *8 | 1.8 |
| Sulfur | 1.5 |

In Table 1, for individual components, the trade names used are as follows.
*1: BR01 manufactured by JSR Corporation, *2: JOMO Process NC-140 manufactured by Japan Energy Corporation, *3: ZEOSIL 1165MP manufactured by Rhodia, *4: Diablack N339 manufactured by Mitsubishi Chemical Corporation, *5: Si75 manufactured by Evonik Industries AG, *6: OZONONE 6C manufactured by Seiko Chemical Co., Ltd., *7: Nocceler D manufactured by Ouchi Shinko Chemical Industrial Co., Ltd., *8: Nocceler CZ manufactured by Ouchi Shinko Chemical Industrial Co., Ltd.

### <Physical Property Evaluation>

For the polymer compositions and crosslinked polymers obtained in the above, evaluation of physical properties shown below was carried out. (1) 70°C tan δ

The crosslinked polymer was used as a sample for measurement, and the measurement was carried out under conditions of a shear strain of 1.0%, an angular velocity of 100 radians per second, and 70°C, using ARES-RDA (manufactured by TA instruments Inc.). The measurement results were indicated by an index taking Reference Example 1 as 100 and evaluation was conducted in comparison with each index of Examples 2 to 19 and Comparative Examples 1 to 4 to be mentioned below. The larger the numerical value is, the smaller the energy loss is and the more satisfactory the low hysteresis loss properties are.

### (2) Mooney viscosity (Blend Mooney viscosity)

The polymer composition before vulcanization was used as a sample for measurement, and the measurement was carried out in accordance with JIS K6300-1 using an L-rotor under conditions of preheating for 1 minute, a rotor operation time of 4 minutes, and a temperature of 100°C. The measurement results were indicated by an index taking Reference Example 1 as 100 and evaluation was conducted in comparison with each index of Examples 2 to 19 and Comparative Examples 1 to 4 to be mentioned below. The larger the numerical value is, the more satisfactory the workability is.

### (3) Abrasion Resistance

The cross-linked polymer was used as a sample for measurement, and the measurement was carried out under conditions of a tensile dynamic strain of 0.7%, an measurement was carried out under conditions of a tensile dynamic strain of 0.7%, an angular velocity of 100 radians per second, and 70°C, using a dynamic spectrometer (manufactured by US Rheometrics). The measurement results were indicated by an index taking Reference Example 1 as 100 and evaluation was conducted in comparison with each index of Examples 2 to 19 and Comparative Examples 1 to 4 to be mentioned below. The larger the numerical value is, the more satisfactory the abraision resistance is.

### [Example 2: Synthesis and Evaluation of Modified Diene Polymer P2]

A modified conjugated diene polymer P2 was obtained in the same manner as in Reference Example 1 except that the polymerization initiator was changed to a lithium amide compound prepared by mixing n-butyllithium with piperidine beforehand. In addition, a polymer composition and a crosslinked polymer were prepared in the same manner as in Reference Example 1 using the modified conjugated diene polymer P2 instead of the modified conjugated diene polymer P1 and physical property evaluation was carried out. The results are shown in the following Table 2. In the table, each numerical value in the column of "Polymerization initiator (molar ratio)" shows the ratio (molar ratio) of each compound used relative to the total amount of the polymerization initiator(s) used in the reaction. Each numerical value in the column of "Coupling agent (molar ratio)" shows the ratio (molar ratio) of each compound used relative to the total amount of the coupling agent(s) used in the reaction and each numerical value in the column of "Coupling agent functional group/Li active end (molar ratio)" shows the existing ratio (molar ratio) of the functional group X of the coupling agent relative to the lithium active end present in the reaction system. Each numerical value in the column of "End-modifying agent/Li active end (molar ratio)" shows the ratio (molar ratio) of the end-modifying agent relative to the lithium active end present in the reaction system.

### [Examples 3 to 10, 12 to 16, and 20 to 33 and Comparative Examples 1 to 3: Synthesis and Evaluation of Modified Conjugated Diene Polymers P3 to P16, P20 to P33, and PC 1 to PC3]

Modified conjugated diene polymers P3 to P16, P20 to P33, and PC1 to PC3 are each obtained in the same manner as in the above Reference Example 2 except that the kinds and amounts of the polymerization initiator, coupling agent, and end-modifying agent to be used were changed as described in the following Tables 2 to 5. Incidentally, two kinds of polymerization initiators were used in combination in Examples 6 to 10, 12 to 16, and 20 to 33 and Comparative Examples 2 and 3 and two kinds of coupling agents were used in combination in Examples 6, 10, and 12 to 16. In Comparative Example 1, to the polymer solution after the reaction with adding a coupling agent, isopropanol was added instead of an end-modifying agent to terminate the reaction.
P20 to P33, and PC1 to PC3, a polymer composition and a crosslinked polymer were prepared in the same manner as in the above Reference Example 1, and physical property evaluation was carried out. The results are shown in the following Tables 2 to 5.

### [Example 17: Synthesis and Evaluation of Modified Conjugated Diene Polymer P17 Using Dilithium Initiator]

A modified conjugated diene polymer P17 was obtained in the same manner as in Reference Example 1 except that 2.6 mmol of a sec-butyllithium/1,3-diisopropenylbenzene diadduct (organodilithium compound prepared by mixing sec-butyllithium and 1,3-diisopropenylbenzene beforehand) was used as a polymerization initiator and 0.28 mmol of 1,4-bis[3-(trimethoxysilyl)propyl]piperazine (CP1-1) and 0.10 mmol of silicon tetrachloride (CP2-1) were used as coupling agents. Incidentally, (CP1-1)/(CP2-1) was controlled to 1/1 (molar ratio) and preparation was conducted so that the total of the number of the alkoxy group derived from CP1-1 and the number of the chlorine atom derived from CP2-1 present in the reaction system became 0.4 molar equivalents to the active end of the conjugated diene polymer obtained by the polymerization reaction. Furthermore, using the resulting modified conjugated diene polymer P17, a polymer composition and a crosslinked polymer were prepared in the same manner as in the above Reference Example 1, and physical property evaluation was carried out. The results are shown in the following Table 3.

### [Examples 18 and 19, Comparative Example 4: Synthesis and Evaluation of Modified Conjugated Diene Polymers P18, P19, and PC4]

Modified conjugated diene polymers P18, P19, and PC4 are each obtained in the same manner as in the above Example 17 except that the kind and amount of the polymerization initiator to be used were changed as described in the following Table 3. Incidentally, the amounts of the coupling agent and the end-modifying agent were changed in Example 19 as described in the following Table 3. In Comparative Example 4, to the polymer solution after the reaction with adding a coupling agent, isopropanol was added instead of an end-modifying agent to terminate the reaction. Furthermore, from each of the modified conjugated diene polymers P18, P19, and PC4, a polymer composition and a crosslinked polymer were prepared in the same manner as in the above Reference Example 1, and physical property evaluation was carried out. The results are shown in the following Table 3.

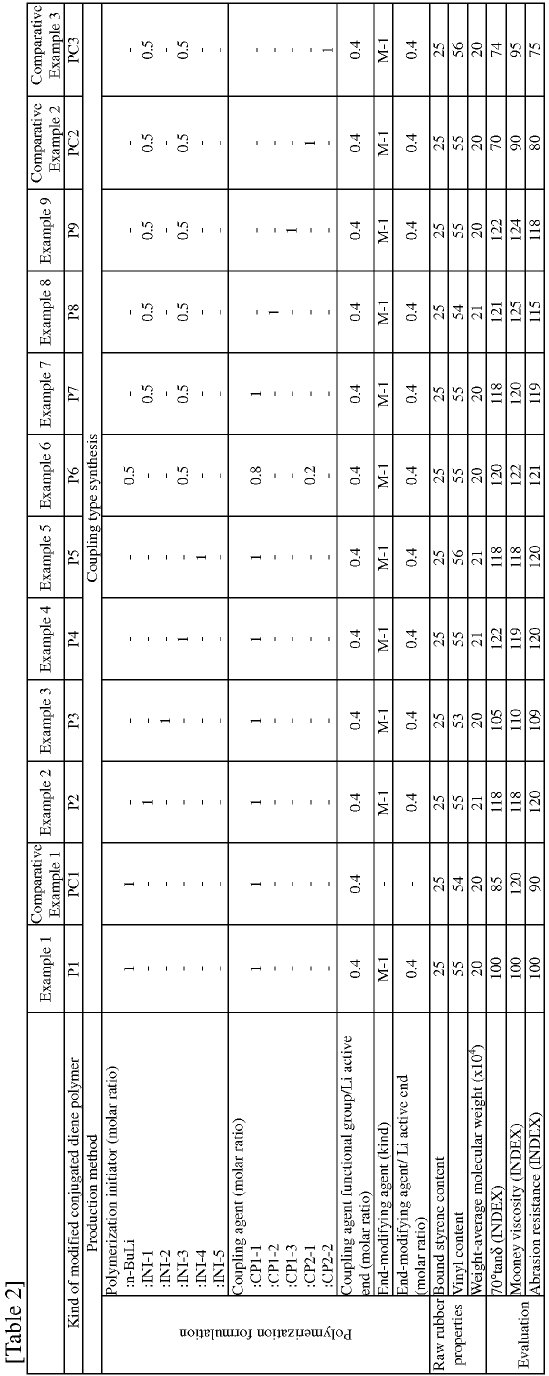

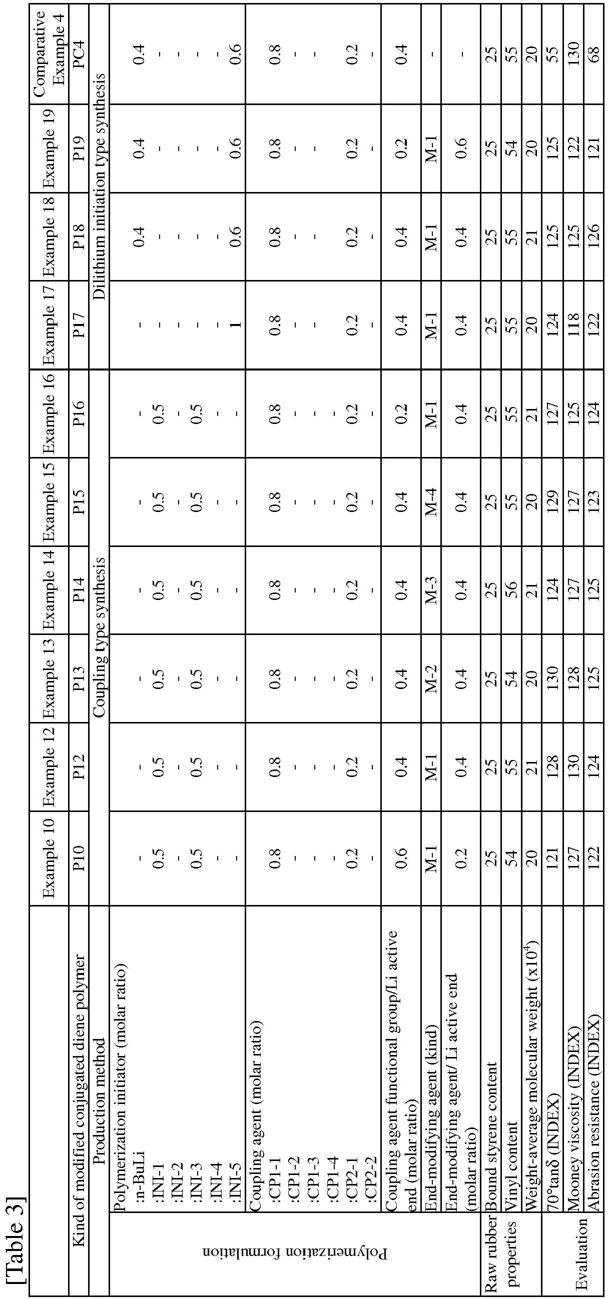

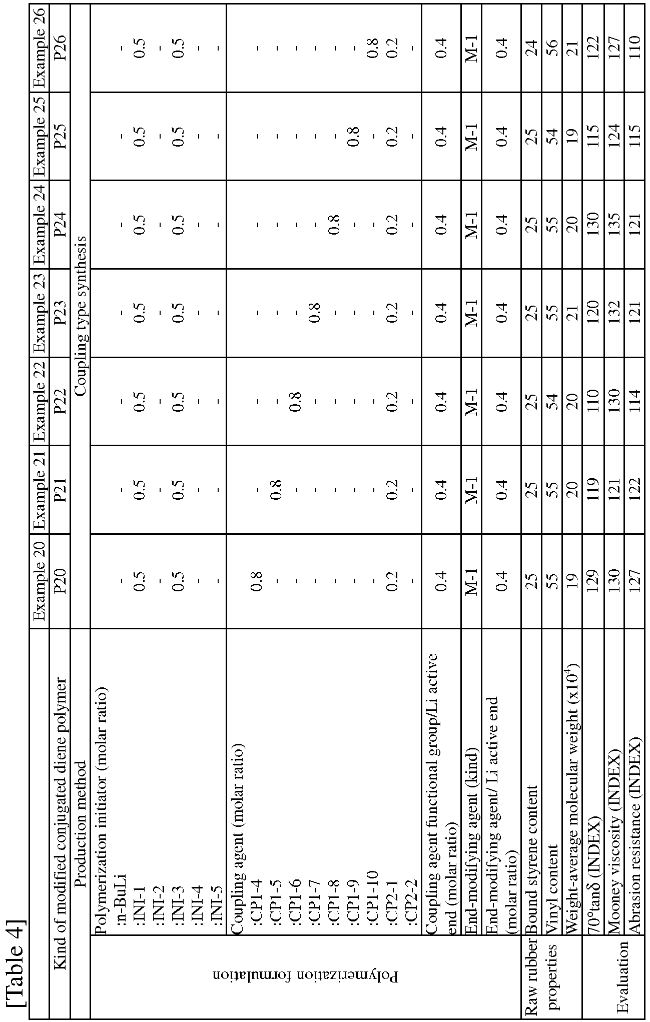

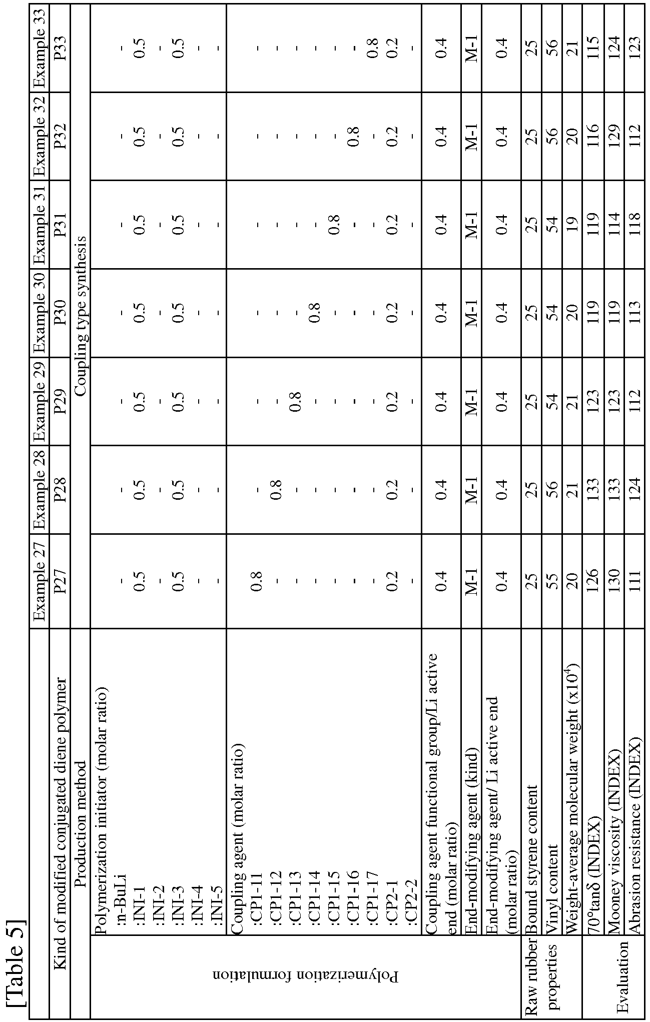

In Tables 2 to 5, abbreviations of the compounds are as follows.
Compound r1: 2,2-di(2-tetrahydrofuryl)propane
INI-1: a reaction product of n-butyllithium and piperidine
INI-2: a reaction product of n-butyllithium and diethylamine
INI-3: a reaction product of n-butyllithium and a compound represented by the above formula (I-2)
INI-4: a reaction product of n-butyllithium and a compound represented by the above formula (I-4)
INI-5: a sec-butyllithium/1,3-diisopropenylbenzene diadduct
CP1-1: 1,4-bis[3-(trimethoxysilyl)propyl]piperazine
CP1-2: a trade name "X-41-1053" (manufactured by Shin-Etsu Chemical Co., Ltd., a polyorganosiloxane having a group represented by the following formula (8) at side chain (provided that "*" in the formula (8) indicates a bonding hand to the silicon atom))
CP1-3: a compound represented by the following formula (9) (a mixture of n=6 to 9)
CP1-4: N- [3 -(triethoxysilyl)propyl] -2-carbomethoxyaziridine
CP1-5: 3-(2-oxo-l-pyrrolidinyl)-propylmethyldiethoxysilane
CP1-6: 3,3'-bis(dimethoxymethylsilyl)propyl ether
CP1-7: ethyl 11-ethyldichlorosilylundecanoate
CP1-8: carboethoxyadipoyl chloride
CP1-9: 1-(methyldiethoxysilyl)-3 -diethylphosphonopropane
CP1-10: 3,3'-bis(diethoxyphosphoryl)dipropylphenyl phosphate
CP1-11: diethylene glycol bis-phosphorodichloridate
CP1-12: 3 -N,N-di(3 -methoxy-3 -oxopropyl)-aminopropyltriethoxysilane
CP1-13: methyl-2,5-dibenzylideneaminopentanoate
CP1-14: ethyl-8-(dimethoxyphosphoryl)-6-oxooctanoate
CP1-15: 4,4'-di(methoxycarbonylphenyl)-2,2'-bipyridine
CP1-16: 2,2,6,6-tetrachloro-2,6-disilaheptane
CP1-17: N,N'-dibenzylidene-1,6-diaminohexane
CP2-1: silicon tetrachloride
CP2-2: N,N'-dichloropiperazine
M-1: N,N-bis(trimethylsilyl)aminopropylmethyldiethoxysilane
M-2: 3 -(4-trimethylsilyl-1 -piperazino)propyltriethoxysilane
M-3: N-[2-(trimethoxysilyl)-ethyl]-N,N',N'-trimethylethane-1,2-diamine
M-4: N,N',N'-tris(trimethylsilyl)-N-(2-aminoethyl)-3-aminopropyltriethoxysilane

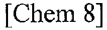

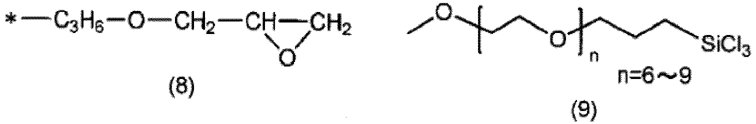

As shown in Tables 2 to 5, in Examples 2 to 10 and 12 to 33, the low hysteresis loss properties, workability, and abrasion resistance were all satisfactory with good balance as compared with Comparative Examples 1 to 4. Of these Examples, especially excellent results were obtained in Examples (4 to 10, 12 to 20, 24, and 28) where a specific compound (CP1-1, CP1-2, CP1-3, CP1-4, CP1-8, or CP1-12) was used or a dilithium compound was used, as a polymerization initiator.

## Claims

1. A method for producing a modified conjugated diene polymer, comprising:
a polymerization step of polymerizing a conjugated diene compound or polymerizing a conjugated diene compound and an aromatic vinyl compound to obtain a conjugated diene polymer having an active end, in the presence of a metal amide compound obtained by mixing an alkali metal compound or an alkaline earth metal compound with a secondary amine compound, wherein the secondary amine compound has a trisubstituted nitrogen atom to which three atoms other than a hydrogen atom are bound, and
a first modification step of reacting the active end with the following compound (C1):
(C1) a compound having a functional group (a) that interacts with silica, having one or more linear structures where three or more groups or atoms in total derived from at least either of a methylene group and a divalent atom are linearly connected, and capable of binding to a plurality of the active ends;
wherein the secondary amine compound has, as a group containing the trisubstituted nitrogen atom, at least one selected from the group consisting of a nitrogen-containing group in which two hydrogen atoms of a primary amino group are each substituted with a monovalent protective group and a nitrogen-containing group in which one hydrogen atom of a secondary amino group is substituted with a monovalent protective group;
wherein the secondary amine compound is represented by the following formulae (3) or (4); 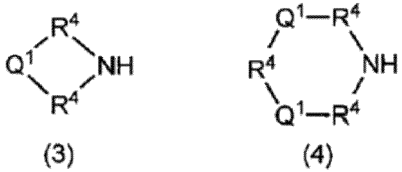 wherein, in the formulae (3) and (4),
R⁴ is a hydrocarbylene group and Q¹ is a divalent group represented by the following formula (5), (6), or (7); R⁴'s and Q¹'s present in plurality in the formulae may be each the same or different from each other; 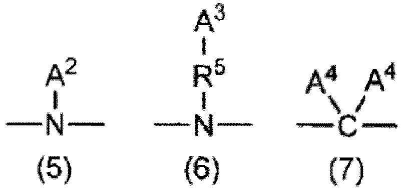 wherein,
in the formula (5), A² is a trisubstituted hydrocarbylsilyl group in which three hydrocarbyl groups are bound to a silicon atom;
in the formula (6), A³ is a monovalent functional group which has the trisubstituted hydrocarbylsilyl group and at least one atom selected from the group consisting of a nitrogen atom, a phosphorus atom, and a sulfur atom, does not have an active hydrogen, and binds to R⁵ with a nitrogen atom, a phosphorus atom, or a sulfur atom, a tertiary amino group, a tertiary phosphino group, or -SR¹ (R¹ is a hydrocarbyl group); R⁵ is a hydrocarbylene group;
in the formula (7), A⁴ is a monovalent functional group which has at least one atom selected from the group consisting of a nitrogen atom, a phosphorus atom, and a sulfur atom, does not have an active hydrogen, and binds to the carbon atom composing the nitrogen-containing heterocycle with a nitrogen atom, a phosphorus atom, or a sulfur atom; A⁴'s existing in plurality are the same or different from each other.

2. The method for producing a modified conjugated diene polymer according to claim 1, wherein (C1) is the following compound (C1'):
(C1') a compound having a functional group (a) that interacts with silica, having a plurality of functional groups (b) capable of reacting with the active end, and capable of binding the active end to the functional group (a) through a linear structure composed of three or more atoms connected with a single bond, by a reaction of the functional group (b) with the active end.

3. The method for producing a modified conjugated diene polymer according to claim 1 or 2, which further comprises a second modification step of reacting the active end with a compound (M) having a functional group that interacts with silica and capable of binding to one above active end.

4. A method for producing a modified conjugated diene polymer, comprising:
a polymerization step of polymerizing a conjugated diene compound or polymerizing a conjugated diene compound and an aromatic vinyl compound to obtain a conjugated diene polymer having an active end, using a polyfunctional lithium compound as a polymerization initiator,
a first modification step of reacting the active end with the following compound (C1):
(C1) a compound having a functional group (a) that interacts with silica, having one or more linear structures where three or more groups or atoms in total derived from at least either of a methylene group and a divalent atom are linearly connected, and capable of binding to a plurality of the active ends, and
a second modification step of reacting the active end with a compound (M) having a functional group that interacts with silica and capable of binding to one above active end.

5. The method for producing a modified conjugated diene polymer according to claim 4, wherein (C1) is the following compound (C1'):
(C1') a compound having a functional group (a) that interacts with silica, having a plurality of functional groups (b) capable of reacting with the active end, and capable of binding the active end to the functional group (a) through a linear structure composed of three or more atoms connected with a single bond, by a reaction of the functional group (b) with the active end.

6. The method for producing a modified conjugated diene polymer according to claim 4 or 5, wherein the compound (M) is a compound represented by the following formula (1): 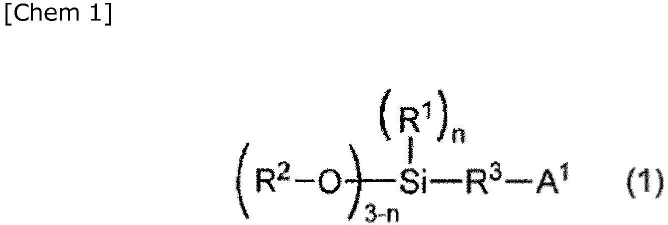 wherein A¹ is a monovalent functional group which has at least one atom selected from the group consisting of a nitrogen atom, a phosphorus atom, and a sulfur atom, does not have an active hydrogen, and binds to R³ with a nitrogen atom, a phosphorus atom, or a sulfur atom; R¹ and R² are a hydrocarbyl group, R³ is a hydrocarbylene group, and n is an integer of 0 to 2, provided that R¹ and R² may be the same or different from each other, in the case where n is 1, a plurality of R²'s may be the same or different from each other, and in the case where n is 2, a plurality of R¹'s may be the same or different from each other.

7. A polymer composition comprising the modified conjugated diene polymer obtained by the production method according to any one of claims 1 to 6, silica, and a crosslinking agent.

8. A crosslinked polymer obtained by cross-linking the polymer composition according to claim 7.

9. A tire using the crosslinked polymer according to claim 8 at least as a material of a tread or a side wall.

## Patentansprüche

1. Verfahren zum Herstellen eines modifizierten konjugierten Dienpolymers, umfassend:
einen Polymerisationsschritt des Polymerisierens einer konjugierten Dienverbindung oder Polymerisierens einer konjugierten Dienverbindung und einer aromatischen Vinylverbindung, um ein konjugiertes Dienpolymer mit einer aktiven Endstelle zu erhalten, in der Anwesenheit einer durch Mischen einer Alkalimetallverbindung oder einer Erdalkalimetallverbindung mit einer sekundären Aminverbindung erhaltenen Metallamidverbindung, wobei die sekundäre Aminverbindung ein dreifach substituiertes Stickstoffatom, an welchem drei Atome anders als ein Wasserstoffatom gebunden sind, aufweist, und
einen ersten Modifikationsschritt des Reagierens der aktiven Endstelle mit der folgenden Verbindung (C1):
(C1) eine Verbindung mit einer funktionellen Gruppe (a), die mit Silica interagiert, aufweisend eine oder mehrere lineare Strukturen, wo in Summe drei oder mehr Gruppen oder Atome, erlangt von zumindest entweder einer Methylengruppe oder einem divalenten Atom, linear verbunden, und fähig des Bindens an eine Vielzahl von aktiven Endstellen sind;
wobei die sekundäre Aminverbindung aufweist, als eine das dreifach substituierte Stickstoffatom enthaltende Gruppe, zumindest eine ausgewählt aus der Gruppe bestehend aus einer Stickstoff-enthaltenden Gruppe, in welcher zwei Wasserstoffatome einer primären Aminogruppe jeweils mit einer monovalenten Schutzgruppe substituiert sind und einer Stickstoff-enthaltenden Gruppe, in welcher jedes Wasserstoffatom einer sekundären Amingruppe mit einer monovalenten Schutzgruppe substituiert ist;
wobei die sekundäre Aminverbindung durch die folgenden Formeln (3) oder (4) dargestellt ist; 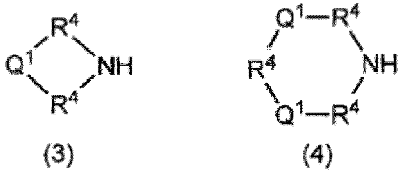 wobei, in den Formeln (3) und (4),
R⁴ eine Hydrocarbylengruppe ist und Q¹ eine durch die folgende Formel (5), (6) oder (7) dargestellte divalente Gruppe ist; R⁴'s und Q¹'s vorhanden in Vielzahl in den Formeln dieselben oder unterschiedlich voneinander sein können; 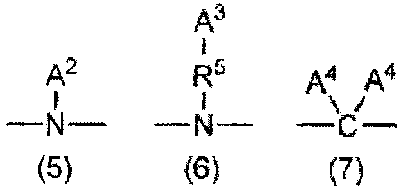 wobei,
in der Formel (5), A² eine dreifach substituierte Hydrocarbylsilylgruppe, in welcher drei Hydrocarbylgruppen an einem Siliziumatom gebunden sind, ist;
in der Formel (6), A³ eine monovalente funktionelle Gruppe ist, welche aufweist die dreifach substituierte Hydrocarbylsilylgruppe und zumindest ein Atom, ausgewählt aus der Gruppe bestehend aus einem Stickstoffatom, einem Phosphoratom und einem Schwefelatom, nicht aufweist einen aktivierten Wasserstoff, und bindet an R⁵ mit einem Stickstoffatom, einem Phosphoratom, oder einem Schwefelatom, einer tertiären Aminogruppe, einer tertiären Phosphinogruppe, oder -SR¹ (R¹ ist eine Hydrocarbylgruppe); R⁵ eine Hydrocarbylengruppe ist;
in der Formel (7), A⁴ eine monovalente funktionelle Gruppe ist, welche aufweist zumindest ein Atom ausgewählt aus der Gruppe bestehend aus einem Stickstoffatom, einem Phosphoratom, und einem Schwefelatom, nicht aufweist einen aktivierten Wasserstoff, und bindet an dem Kohlenstoffatom, das z den Stickstoff-enthaltenden Heterozyklus mit einem Stickstoffatom, einem Phosphoratom, oder einem Schwefelatom zusammensetzt; in Vielzahl existierende A⁴'s sind dieselben oder unterschiedlich voneinander.

2. Verfahren zum Herstellen eines modifizierten konjugierten Dienpolymers nach Anspruch 1, wobei (C1) die folgende Verbindung (C1') ist:
(C1') eine Verbindung mit einer funktionellen Gruppe (a), die mit Silica interagiert, aufweisend eine Vielzahl von funktionellen Gruppen (b), fähig des Reagierens mit der aktiven Endstelle, und fähig des Bindens der aktiven Endstelle an die funktionelle Gruppe (a) durch eine lineare Struktur, zusammengesetzt aus drei oder mehr Atomen, verbunden mit einer Einfachbindung, durch eine Reaktion der funktionellen Gruppe (b) mit der aktiven Endstelle.

3. Verfahren zum Herstellen eines modifizierten konjugierten Dienpolymers nach Anspruch 1 oder 2, welches ferner umfasst einen zweiten Modifikationsschritt des Reagierens der aktiven Endstelle mit einer Verbindung (M) mit einer funktionalen Gruppe, die mit Silica interagiert und fähig des Bindens an eine vorstehende aktive Endstelle ist.

4. Verfahren zum Herstellen eines modifizierten konjugierten Dienpolymers, umfassend:
einen Polymerisationsschritt des Polymerisierens einer konjugierten Dienverbindung oder Polymerisierens einer konjugierten Dienverbindung und einer aromatischen Vinylverbindung, um ein konjugiertes Dienpolymer mit einer aktiven Endstelle zu erhalten, verwendend eine polyfunktionale Lithiumverbindung als einen Polymerisationsinitiator,
einen ersten Modifikationsschritt des Reagierens der aktiven Endstelle mit der folgenden Verbindung (C1):
(C1) eine Verbindung mit einer funktionellen Gruppe (a), die mit Silica interagiert, aufweisend eine oder mehrere lineare Strukturen, wobei drei oder mehr Gruppen oder Atome im Ganzen, abgeleitet von zumindest entweder einer Methylengruppe oder einem divalenten Atom, linear verbunden sind, und fähig des Bindens an eine Vielzahl der aktiven Endstellen, und
einen zweiten Modifikationsschritt des Reagierens der aktiven Endstelle mit einer Verbindung (M) mit einer funktionellen Gruppe, die mit Silica interagiert und fähig des Bindens an einer vorstehenden aktiven Endstelle ist.

5. Verfahren zum Herstellen eines modifizierten konjugierten Dienpolymers nach Anspruch 4, wobei (C1) die folgende Verbindung (C1') ist:
(C1') eine Verbindung mit einer funktionellen Gruppe (a), die mit Silica interagiert, aufweisend eine Vielzahl von funktionellen Gruppen (b), fähig des Reagierens mit der aktiven Endstelle, und fähig des Bindens der aktiven Endstelle an die funktionelle Gruppe (a) durch eine lineare Struktur, zusammengesetzt aus drei oder mehr mit einer Einfachbindung verbundenen Atomen, durch eine Reaktion der funktionellen Gruppe (b) mit der aktiven Endstelle.

6. Verfahren zum Herstellen eines modifizierten konjugierten Dienpolymers nach Anspruch 4 oder 5, wobei die Verbindung (M) eine durch die folgende Formel (1) dargestellte Verbindung ist: 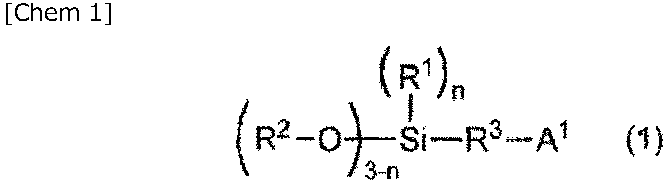 wobei A¹ eine monovalente funktionelle Gruppe ist, welche zumindest ein Atom, ausgewählt aus der Gruppe bestehend aus einem Stickstoffatom, einem Phosphoratom und einem Schwefelatom, aufweist, nicht aufweist einen aktiven Wasserstoff, und an R³ mit einem Stickstoffatom, einem Phosphoratom oder einem Schwefelatom bindet; R¹ und R² eine Hydrocarbylgruppe sind, R³ eine Hydrocarbylengruppe ist, und n eine ganze Zahl von 0 bis 2 ist, vorausgesetzt, dass R¹ und R² gleich oder unterschiedlich voneinander sein können, in dem Fall, wo n 1 ist, eine Vielzahl von R²'s gleich oder unterschiedlich voneinander sein können, und in dem Fall, wo n 2 ist, eine Vielzahl von R¹'s gleich oder unterschiedlich voneinander sein können.

7. Polymerzusammensetzung, umfassend das durch das Herstellungsverfahren nach einem der Ansprüche 1 bis 6 erhaltene modifizierte konjugierte Dienpolymer, Silica, und ein Quervernetzungsmittel.

8. Quervernetztes Polymer, erhalten durch Quervernetzen der Polymerverbindung nach Anspruch 7.

9. Reifen verwendend das quervernetzte Polymer nach Anspruch 8 als zumindest ein Material eines Profils oder einer Seitenwand.

## Revendications

1. Procédé de production d'un polymère diène conjugué modifié, comprenant :
une étape de polymérisation de polymérisation d'un composé diène conjugué ou de polymérisation d'un composé diène conjugué et d'un composé vinyle aromatique pour obtenir un polymère diène conjugué ayant une extrémité active, en présence d'un composé amide métallique obtenu par mélange d'un composé de métal alcalin ou d'un composé de métal alcalino-terreux avec un composé amine secondaire, dans lequel le composé amine secondaire présente un atome d'azote trisubstitué auquel trois atomes autres qu'un atome d'hydrogène sont liés, et
une première étape de modification de réaction de l'extrémité active avec le composé (C1) suivant :
(C1) un composé ayant un groupe fonctionnel (a) qui interagit avec la silice, ayant une ou plusieurs structures linéaires où trois groupes ou atomes ou plus au total dérivés d'au moins l'un ou l'autre d'un groupe méthylène et d'un atome divalent sont reliés linéairement, et capables de liaison à une pluralité des extrémités actives ;
dans lequel le composé amine secondaire a, comme groupe contenant l'atome d'azote trisubstitué, au moins un groupe choisi dans le groupe constitué par un groupe contenant de l'azote dans lequel deux atomes d'hydrogène d'un groupe amino primaire sont chacun substitués par un groupe protecteur monovalent et un groupe contenant de l'azote dans lequel un atome d'hydrogène d'un groupe amino secondaire est substitué par un groupe protecteur monovalent ;
dans lequel le composé amine secondaire est représenté par les formules (3) ou (4) suivantes ; 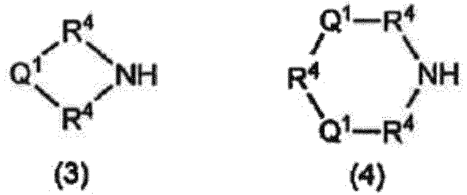 dans lesquelles, dans les formules (3) et (4),
R⁴ est un groupe hydrocarbylène et Q¹ est un groupe divalent représenté par la formule (5), (6) ou (7) suivante ; les R⁴ et les Q¹ présents en pluralité dans les formules peuvent chacun être identiques ou différents les uns des autres ; 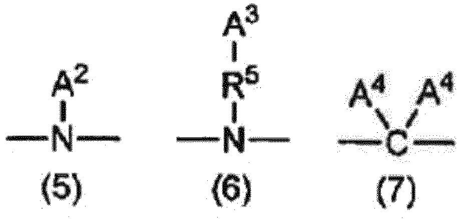 dans laquelle,
dans la formule (5), A² est un groupe hydrocarbylsilyle trisubstitué dans lequel trois groupes hydrocarbyle sont liés à un atome de silicium ;
dans la formule (6), A³ est un groupe fonctionnel monovalent qui a le groupe hydrocarbylsilyle trisubstitué et au moins un atome choisi dans le groupe constitué par un atome d'azote, un atome de phosphore et un atome de soufre, ne présente pas d'hydrogène actif, et se lie à R⁵ avec un atome d'azote, un atome de phosphore ou un atome de soufre, un groupe amino tertiaire, un groupe phosphino tertiaire, ou -SR¹ (R¹ est un groupe hydrocarbyle) ; R⁵ est un groupe hydrocarbylène ;
dans la formule (7), A⁴ est un groupe fonctionnel monovalent qui a au moins un atome choisi dans le groupe constitué par un atome d'azote, un atome de phosphore et un atome de soufre, ne présente pas d'hydrogène actif, et se lie à l'atome de carbone composant l'hétérocycle contenant de l'azote avec un atome d'azote, un atome de phosphore ou un atome de soufre ; les A⁴ existant en pluralité sont identiques ou différents les uns des autres.

2. Procédé de production d'un polymère diène conjugué modifié selon la revendication 1, dans lequel (C1) est le composé (C1') suivant :
(C1') un composé ayant un groupe fonctionnel (a) qui interagit avec la silice, ayant une pluralité de groupes fonctionnels (b) capables de réagir avec l'extrémité active, et capables de lier l'extrémité active au groupe fonctionnel (a) par une structure linéaire composée de trois atomes ou plus reliés par une simple liaison, par une réaction du groupe fonctionnel (b) avec l'extrémité active.

3. Procédé de production d'un polymère diène conjugué modifié selon la revendication 1 ou 2, qui comprend en outre une deuxième étape de modification de réaction de l'extrémité active avec un composé (M) ayant un groupe fonctionnel qui interagit avec la silice et capable de liaison à une extrémité active ci-dessus.

4. Procédé de production d'un polymère diène conjugué modifié, comprenant :
une étape de polymérisation de polymérisation d'un composé diène conjugué ou de polymérisation d'un composé diène conjugué et d'un composé vinyle aromatique pour obtenir un polymère diène conjugué ayant une extrémité active, à l'aide d'un composé de lithium polyfonctionnel comme initiateur de polymérisation,
une première étape de modification de réaction de l'extrémité active avec le composé (C1) suivant :
(C1) un composé ayant un groupe fonctionnel (a) qui interagit avec la silice, ayant une ou plusieurs structures linéaires où trois groupes ou atomes ou plus au total dérivés d'au moins l'un ou l'autre d'un groupe méthylène et d'un atome divalent sont reliés linéairement, et capables de liaison à une pluralité des extrémités actives, et
une deuxième étape de modification de réaction de l'extrémité active avec un composé (M) ayant un groupe fonctionnel qui interagit avec la silice et capable de liaison à une extrémité active ci-dessus.

5. Procédé de production d'un polymère diène conjugué modifié selon la revendication 4, dans lequel (C1) est le composé (C1') suivant :
(C1') un composé ayant un groupe fonctionnel (a) qui interagit avec la silice, ayant une pluralité de groupes fonctionnels (b) capables de réagir avec l'extrémité active, et capables de lier l'extrémité active au groupe fonctionnel (a) par une structure linéaire composée de trois atomes ou plus reliés par une simple liaison, par une réaction du groupe fonctionnel (b) avec l'extrémité active.

6. Procédé de production d'un polymère diène conjugué modifié selon la revendication 4 ou 5, dans lequel le composé (M) est un composé représenté par la formule (1) suivante : 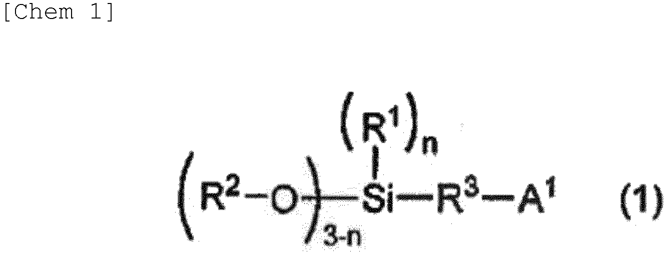 dans laquelle A¹ est un groupe fonctionnel monovalent qui a au moins un atome choisi dans le groupe constitué par un atome d'azote, un atome de phosphore et un atome de soufre, ne présente pas d'hydrogène actif, et se lie à R³ avec un atome d'azote, un atome de phosphore, ou un atome de soufre ; R¹ et R² sont un groupe hydrocarbyle, R³ est un groupe hydrocarbylène, et n est un nombre entier de 0 à 2, à condition que R¹ et R² puissent être identiques ou différents l'un de l'autre, dans le cas où n est 1, une pluralité de R² peuvent être identiques ou différents les uns des autres, et dans le cas où n est 2, une pluralité de R¹ peuvent être identiques ou différents les uns des autres.

7. Composition polymère comprenant le polymère diène conjugué modifié obtenu par le procédé de production selon l'une quelconque des revendications 1 à 6, de la silice, et un agent de réticulation.

8. Polymère réticulé obtenu par réticulation de la composition polymère selon la revendication 7.

9. Pneu utilisant le polymère réticulé selon la revendication 8 au moins comme matériau d'une bande de roulement ou d'une paroi latérale.
